# EUROPÄISCHE PATENTSCHRIFT

(11) **EP 2 185 654 B1**
(45) Veröffentlichungstag und Bekanntmachung des Hinweises auf die Patenterteilung: **18.12.2013**
(21) Anmeldenummer: 08773475.2
(22) Anmeldetag: 16.06.2008
(51) Int. Cl.: C09C 1/00

(54) **EFFEKTPIGMENTE AUF BASIS VON AUS ANORGANISCH-ORGANISCHEN MISCHPHASEN GEBILDETEN SUBSTRATEN, DEREN HERSTELLUNG UND VERWENDUNG**
EFFECT PIGMENTS BASED ON SUBSTRATES FORMED FROM INORGANIC-ORGANIC MIXED PHASES, PRODUCTION AND USE THEREOF
PIGMENTS À EFFET À BASE DE SUBSTRATS COMPOSÉS DE PHASES MIXTES ANORGANIQUES-ORGANIQUES, FABRICATION ET UTILISATION DE CES PIGMENTS

(30) Priorität: 29.08.2007 DE 102007041027
(43) Veröffentlichungstag der Anmeldung: 19.05.2010
(73) Patentinhaber: Eckart GmbH, 91235 Hartenstein (DE)
(72) Erfinder: KAUPP, Günter, 91284 Neuhaus (DE); SCHMIDT, Ulrich, 91217 Hersbruck (DE); SCHUMACHER, Dirk, 91257 Pegnitz (DE)
(74) Vertreter: Walcher, Armin
(86) Internationale Anmeldenummer: PCT/EP2008/004847
(87) Internationale Veröffentlichungsnummer: WO 2009/030293

(56) Entgegenhaltungen:
- WO-A-93/08237
- WO-A-2007/076967
- WO-A-2007/098878
- DE-A1- 19 639 783

## Beschreibung

Die Erfindung betrifft Effektpigmente mit plättchenförmigem Substrat, welches mindestens auf einer Seite mit mindestens einer Beschichtung aus semitransparentem Metall und/oder mindestens einer hochbrechenden Beschichtung mit einer Brechzahl ≥ 2,0 versehen ist, sowie deren Herstellung und Verwendung

Klassische Perlglanzpigmente basieren u.a. auf dem Naturprodukt Glimmer, der ein transparentes, niedrigbrechendes plättchenförmiges Substrat mit leicht gelblicher Eigenfarbe darstellt. Diese Substrate werden mit hochbrechenden Oxiden wie vorzugsweise TiO₂ und/oder Fe₂O₃ beschichtet, was zu den bekannten Periglanzeffekten führt. Glimmer weist neben seiner Eigenfarbe die Nachteile auf, als Naturprodukt großen Schwankungen zu unterliegen und eine uneinheitliche Dicke, zu viele Stufen innerhalb eines Substrates und eine uneinheitliche Größe zu besitzen. Daher wurden viele Versuche unternommen, Glimmer durch synthetische Materialien zu ersetzen, die in ihren Dimensionen (Dicke, Dickeverteilung, Größe) und optischen Eigenschaften (Transparenz, gezielte Einfärbung) besser kontrollierbar und variierbar sind.

Die EP 0 240 952 A2 beschreibt eine Methode zur Herstellung plättchenförmigen Materials, bei der auf einem endlosen Band flüssige Metallverbindungen oder deren Lösungen oder Sole aufgebracht werden und einen dünnen Film bilden. Dieser Film wird anschließend verfestigt und in plättchenförmiges Material überführt.

Die WO 93/08237 beschreibt ebenfalls aus Metalloxiden bestehende Substrate, in die jedoch zusätzlich Farbmittel eingebracht worden sind. Die Metalloxide werden gebildet, indem ein entsprechender Precursor als dünner Film auf ein endloses Band aufgebracht wird. Der nach Trocknung entstandene verfestigte Film wird mit Säure behandelt, beschichtet, gewaschen und anschließend vom Trägermedium getrennt. Durch Beschichten mindestens einer Seite des Filmes mit semitransparenten Metallschichten oder hochbrechenden Metalloxiden werden die für Effektpigmente optisch notwendigen Voraussetzungen erzeugt.

Perlglanzpigmente, die auf einem plättchenförmigen Substrat aus Aluminiumoxid basieren, sind in der EP 0 763 573 A2 beschrieben.
Insbesondere Al₂O₃-basierende Perlganzpigmente sind hinsichtlich ihrer mechanischen Eigenschaften sehr hart und spröde. Derartige Pigmente können beispielsweise Ringleitungen in Automobillackierungssystemen schädigen.

Perlglanzpigmente mit einem Substrat aus C-Glas sind in der EP 0 912 640 B1 beschrieben.

Ferner sind Effektpigmente basierend auf rein organischen Substraten aus der WO 01/92394 A1 bekannt. Bei derartigen Effektpigmenten haften die Metalloxidschichten nur schlecht auf dem rein organischen Substrat.

Die DE 10 2004 032 799 A1 beschreibt Effektpigmente mit einheitlicher Größe und Form, Die plättchenförmigen Substrate besitzen eine Kreis- oder Ellipsenform oder auch eine Vielecksform und bestehen aus den bereits bekannten Metalloxiden.

In der DE 196 38 797 A1 werden ebenfalls Effektpigmente mit einheitlicher Größe und Form beschrieben. Hier bestehen die Substrate jedoch aus organischen, polymerisierbaren Materialien. Unter anderem können flüssigkristalline Verbindungen einpolymerisiert werden. Die Polymerisation wird in einem Flächengebilde mit durchgehenden Öffnungen definierter Form und Größe wie beispielsweise Netze aus Kunststoff oder Metall durchgeführt, wobei die Maschenweite die Geometrie der herzustellenden Pigmente definiert.

Die DE 196 39 783 A1 offenbart modifizierte Perlglanzpigmente für Wasserlacksysteme.

Die WO 2007/076967 A2 offenbart ein IR-Strahlung reflektierendes Pigment.

Nachteilig bei herkömmlichen Effektpigmenten ist, dass diese teilweise sehr hart sind. Insbesondere bei der Verwendung von Periglanzpigmenten, die auf Al₂O₃-Plättchen als Substrat basieren, kann es beim Umpumpen von Farben oder Lacken in Rohrleitungssystemen oder bei der Applikation in Spritzdüsen zu Beschädigungen an den Rohrleitungen bzw. Spritzdüsen durch Abrasion führen.

Bei Effektpigmenten auf Basis von organisch-chemischen Substraten ist nachteilig, dass darauf aufgebrachte Metalloxidschichten leicht ablösbar sind.

Aufgabe der Erfindung ist es mithin, Effektpigmente bereitzustellen, die einerseits mechanisch beständig sind und andererseits eine etwas verringerte Härte aufweisen.

Die der Erfindung zugrunde liegende Aufgabe wird durch Bereitstellung von Effektpigmenten gemäß Anspruch 1 gelöst.

Bevorzugte Weiterbildungen der Erfindung sind in den Unteransprüchen 2 bis 10 angegeben.

Die Aufgabe wird weiterhin gelöst durch ein Verfahren, welches folgende Schritte umfasst.:
(a) Vermengen wenigstens eines organischen Netzwerkbildners und wenigstens einer reaktiven organischen Komponente und wenigstens eines anorganischen Netzwerkbildners und/oder nanoskaligen anorganischen Partikeln sowie einer Flüssigphase unter Ausbildung einer Reaktionszusammensetzung,
(b) Aufbringen der Reaktionszusammensetzung auf einen flächigen Untergrund,
(c) Ausbilden einer verfestigten anorganisch/organischen Mischphase,
(d) Überführen der anorganisch/organischen Mischphase in plättchenförmige Substrate,
(e) Beschichten der plättchenförmigen Substrate mit mindestens einer Beschichtung aus semitransparentem Metall und/oder mindestens einer hochbrechenden Beschichtung mit einer Brechzaht ≥ 2,0.

Eine bevorzugte Weiterbildung der Erfindung ist in Anspruch 12 angegeben.

Unter einer anorganisch/organischen Mischphase wird erfindungsgemäß verstanden, daß wenigstens eine anorganische Komponente und wenigstens eine organische Komponente in dem Substrat gemeinsam vorliegen und mindestens teilweise miteinander kovalent verbunden sind.

Unter "mindestens eine Seite" wird zumindest die obere Fläche oder untere Fläche des plättchenförmigen Substrates verstanden.

Unter "hochbrechender Beschichtung" wird eine Beschichtung aus einem hochbrechenden Material verstanden.

In der anorganisch/organischen Mischphase liegen die organischen Komponenten vorzugsweise netzwerkartig und/oder als Matrix vor. Gemäß einer erfindungsgemäßen Variante liegen auch die anorganischen Komponenten netzwerkartig oder als Matrix vor. Die aus organischen Komponenten und anorganischen Komponenten jeweils gebildeten Netzwerke und/oder Matrices durchdringen sich gegenseitig bei einer bevorzugten Ausführungsform.

Die anorganische Komponente, vorzugsweise anorganische Oxidkomponente, kann auch partikulär, vorzugsweise in Form von nanoskaligen Partikeln, vorliegen und in einer organischen und/oder anorganisch/organischen Komponente eingebettet oder mit dieser zumindest teilweise kovalent verbunden vorliegen. Die, vorzugsweise nanoskaligen, Partikel der anorganischen Komponente können auch miteinander in Kontakt stehen und beispielsweise in Form von Ketten oder traubenartigen Clustern vorliegen.

Es hat sich überraschend gezeigt, dass plättchenförmige Substrate, die neben einem anorganischen Anteil auch über einen Anteil an organischer Komponente verfügen, überraschende Materialeigenschaften aufweisen.

Effektpigmente, die unter Verwendung dieser Substrate mit anorganisch/organischer Mischphase hergestellt wurden, sind mechanisch stabil, führen jedoch bei der Verwendung nicht zu Abrasionen oder Beschädigungen von beispielsweise Rohrleitungen in Lackieranlagen oder bei Spritzdüsen, wie dies herkömmlicherweise der Fall ist, d.h. das Ausmaß der Abrasionen oder Beschädigungen wird signifikant verringert. Vorzugsweise kommt es zu keinen merklichen Abrasionen oder Beschädigungen.

Es wird vermutet, dass der organisch-chemische Anteil in der anorganisch/organischen Mischphase den Substraten eine gewisse "Weichheit" oder Elastizität oder Flexibilität verleiht, die den Effektpigmenten, die unter Verwendung dieser plättchenförmigen Substrate hergestellt wurden, die Härte und damit die nachteiligen stark abrasiven Eigenschaften herkömmlicher Effektpigmente nimmt.

Insbesondere bei Einbettung von anorganischen Partikeln in eine organisch-chemische oder weitgehend organisch-chemische Matrix oder anorganisch/organische Matrix wird ein Substrat erhalten, das eine signifikante Elastizität oder Flexibilität bei gleichzeitig hervorrragender mechanischer Beständigkeit, beispielsweise Abriebbeständigkeit, aufweist. Die auf Basis dieser Substrate hergestellten erfindungsgemäßen Effektpigmente weisen überraschenderweise ebenfalls eine gewünschte "Weichheit" oder Elastizität oder Flexibilität auf.

Erfindungsgemäß weist die wenigstens eine Mischphase wenigstens teilweise ein anorganisches Netzwerk, das eine oder mehrere anorganische Oxidkomponente(n) aufweist, und wenigstens eine organische Komponente auf, mit der Maßgabe, das der Anteil der organischen Komponente 2 bis 98 Gew.-%, bezogen auf das Gewicht der gesamten anorganisch/organischen Mischphase, beträgt. Weiterhin ist bevorzugt, dass der Anteil der organischen Komponente in einem Bereich von 5 bis 95 Gew.-%, weiter bevorzugt von 10 bis 90 Gew.-%, noch weiter bevorzugt im Bereich von 20 bis 80 Gew.%, jeweils bezogen auf das Gewicht der gesamten anorganisch/organischen Mischphase, liegt.

Unterhalb von 2 Gew.-% der organischen Komponente sind die vorteilhaften, d.h. elastizitätsverbessernden Wirkungen des organischen Oligomers und/oder Polymers kaum wirksam. Auf der anderen Seite gehen oberhalb von 98 Gew.-% an organischem Anteil in der Mischphase die vorteilhaften, d.h. die Abriebsbeständigkeit verbessernden Wirkungen der anorganischen Komponente verloren. Zudem lassen sich dann diese Substrate nur noch schwer mit Metalloxiden bzw. semitransparenten Metallschichten beschichten.

Analytisch auf einfache Weise bestimmbar sind diese Gehalte der organischen Komponenten anhand des C-Gehaltes des Effektpigmentes.

Das plättchenförmige Substrat besteht aus einer anorganisch/organischen Mischphase. Im folgenden werden die Begriffe anorganisch/organische Mischphase und Mischphase austauschbar verwendet, sofern nicht anders angegeben. Es ist bevorzugt, wenn die anorganisch/organische Mischphase und/oder das plättchenförmige Substrat mit oder aus der anorganisch/organischen Mischphase eine Brechzahl von ≤ 1,8, weiter bevorzugt < 1,7, noch weiter bevorzugt < 1,6 aufweist.

In einer weiteren bevorzugten Ausführungsform weist die anorganisch/organische Mischphase und/oder das plättchenförmige Substrat mit oder aus der anorganisch/organischen Mischphase eine Brechzahl von > 1.8, weiter bevorzugt > 2.0, noch weiter bevorzugt > 2.2 auf. Dies ist insb, der Fall bei Füllung mit hochbrechenden Metalloxidnanopartikeln wie TiO₂, ZrO₂, Fe₂O₃. Vorzugsweise ist dann die Reihenfolge einer nachfolgenden Beschichtung zuerst niedrigbrechend

Weiterhin ist bevorzugt, dass die organische Komponente in dem plättchenförmigen Substrat ein organisches Oligomer und/oder Polymer ist.

Erfindungsgemäß sind anorganisches Oxidnetzwerk und organisches Oligomer und/oder Polymer über wenigstens einen organischen Netzwerkbildner wenigstens teilweise kovalent miteinander verbunden. Hierbei handelt es sich um Reagenzien, die sowohl an das anorganische Netzwerk als auch an das organische Oligomer und/oder Polymer anbinden können.

Gemäß einer bevorzugten Ausführungsform erfolgt die wenigstens teilweise kovalente Bindung von anorganischer Komponente, vorzugsweise anorganischer Oxidkomponente, und organischem Oligomer und/oder Polymer wenigstens teilweise durch einen oder mehrere organische Netzwerkbildner, wobei der organische Netzwerkbildner vorzugsweise die allgemeine Formel (I)

R¹ₙR²ₘR³ₒSiX₍₄₋ₙ₋ₘ₋ₒ₎ (I)

aufweist, wobei X für eine hydrolysierbare Gruppe, nach deren Hydrolyse eine kovalente Bindung von organischem Netzwerkbildner mit dem anorganischen Netzwerk ausgebildet werden kann, steht
und R¹ für eine reaktive organische Gruppe steht, die mit dem organischen Oligomer und/oder Polymer kovalent verbindbar ist,
R² und R³ unabhängig voneinander jeweils für eine organische Gruppe stehen, die mit dem organischen Oligomer und/oder Polymer kovalent verbindbar sein können, mit der Maßgabe,
daß n, m und o ganze Zahlen sind, wobei n+m+o = 1-3 und n = 1 bis 3, m = 0 bis 2
und o = 0 bis 2 ist,
und/oder die allgemeine Formel (II)

(R¹O)ₙ(R²O)ₘ(R³O)ₒMX₍ₖ₋ₙ₋ₘ₋ₒ₎ (II)

aufweist, wobei die metallorganische Verbindung wenigstens eine hydrolysierbare Gruppe X, nach deren Hydrolyse eine kovalente Bindung von organischem Netzwerkbildner mit dem anorganischen Netzwerk ausgebildet werden kann, wenigstens einen organischen Rest R¹, der für eine reaktive organische Gruppe steht, die mit dem organischen Oligomer und/oder Polymer kovalent verbindbar ist, und R² und R³ unabhängig voneinander jeweils für eine organische Gruppe stehen können, die mit dem organischen Oligomer und/oder Polymer kovalent verbindbar sein können, wobei
- k: für die formale Oxidationszahl von M steht,
- M: für Al, Zr oder Ti steht,
- n: für eine ganze Zahl von 1 bis (k-1) steht,
- m: für eine ganze Zahl von 0 bis (k-2) steht,
- o: für für eine ganze Zahl von 0 bis (k-2) steht, und
wobei n+m+o eine ganze Zahl von 1 bis k-1 ist.

Unter formaler Oxidationszahl wird erfindungsgemäß verstanden, daß Aluminium die Oxidationszahl III, Zirkonium die Oxidationszahl II, III oder IV, und Titan die Oxidationszahl II, III oder IV haben kann. Vorzugsweise haben sowohl Zirkonium als auch Titan die Oxidationszahl IV.

Vorzugsweise besitzt der organische Netzwerkbildner die allgemeine Formel (II), wobei die hydrolysierbare(n) Gruppe(n) X unabhängig voneinander aus der Gruppe, die aus Halogen, Hydroxy, Alkoxy mit 1-20 C-Atomen, welche geradkettig oder verzweigt sein können und Heteroatome, vorzugsweise O, S und/oder N, in der Kohlenstoffkette aufweisen können, und Mischungen davon besteht, ausgewählt wird.

Die reaktive Gruppe R¹ bzw. der reaktive organische Rest R¹ ist gemäß einer bevorzugten Weiterbildung der Erfindung polymerisierbar. Der Rest R¹ kann beispielsweise mit weiteren Resten R¹ polymerisierbar sein, so daß der organische Netzwerkbildner als solcher in einer oligomerisierten oder polymerisierten Form in der anorganisch/organischen Mischphase vorliegen kann. Der Rest R¹ kann aber auch mit anderen Monomeren polymerisierbar sein, so daß der organische Netzwerkbildner in der anorganisch/organischen Mischphase in einem auch aus weiteren Monomeren aufgebautem Polymer in einpolymerisierter Form vorliegen kann.

Als organische Netzwerkbildner sind besonders bevorzugt organofunktionelle Silane. Diese können nach der Hydrolyse der hydrolysierbaren Gruppe X an das anorganische Netzwerk anbinden. Durch die Hydrolyse wird die Gruppe X in der Regel durch eine OH-Gruppe ersetzt, die dann unter Kondensation mit OH-Gruppen des anorganischen Netzwerkes eine kovalente Bindung ausbildet. Dabei steht die Gruppe X vorzugsweise für Halogen, Hydroxy, Alkoxy mit 1-10 C-Atomen, welche geradkettig oder verzweigt sein können, in der Kohlenstoffkette aufweisen können, und Mischungen davon.

Der organische Netzwerkbildner bindet wenigstens über die funktionelle Gruppe R¹ mit oder an das organische Oligomer und/oder Polymer. R¹ ist vorzugsweise eine reaktive funktionelle Gruppe.

Der reaktive, vorzugsweise polymerisierbare, organische Rest R¹ weist vorzugsweise einen oder mehrere Substituenten auf, die aus der Gruppe ausgewählt werden ,die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamatgruppe und Mischungen davon besteht. Der organische Rest R¹ ist vorzugsweise über eine kovalente C-Si Bindung mit dem zentralen Siliziumatom verbunden.

Die Reste R² und R³ unabhängig voneinander aus der Gruppe, die aus H-, (C₁ - C₄₀)-Alkyl-, (C₁ - C₄₀)-fluorierte Alkyl-, (C₁ - C₄₀)-teilfluorierte Alkyl-; (C₂ - C₄₀)-Alkenyl-, (C₂ - C₄₀)-Alkinyl-; (C₆ - C₃₆)-Aryl-, fluorierte (C₆ - C₃₆)-Aryl-, teilfluorierte (C₆ - C₃₆)-Aryl-; (C₇ - C₄₀)-Alkylaryl-, (C₇ - C₄₀)-Arylalkyl-, fluorierte (C₇ - C₄₀)-Alkylaryl-, teilfluorierte (C₇ - C₄₀)-Alkylaryl-; (C₈ - C₄₀)-Alkenylaryl-, (C₈ - C₄₀)-Arylalkinyl-, (C₈ - C₄₀)-Alkinylaryl-; (C₅ - C₄₀)-Cycloalkyl-, (C₆ - C₄₀)-Alkylcycloalkyl-, (C₆ - C₄₀)-Cycloalkylalkylsilane, die jeweils mit Amino-, Hydroxy-, Thiol-, Epoxy-, Acrylat-, Methacrylat-, Vinyl-, Allyl-, Alkenyl-, Alkinyl-, Carboxy-, Carboxylanhydrid-, lsocyanat-, Cyanat-, Ureido-, Carbamat- und/oder Estergruppe substituiert sein und in den Kohlenstoffketten und Kohlenstoffringsystemen O, N und S als Heteroatome enthalten können, besteht, ausgewählt werden. Vorzugsweise weisen die Reste R² und R³ Kettenlängen mit 3 bis 20 Kohlenstoffatomen, weiter bevorzugt mit 5 bis 18 Kohlenstoffatomen auf. Die Reste R² und R³ können dabei verzweigt und/oder linear sein. Im Falle von Alkylketten können diese von Heteroatomen wie O, S, oder N unterbrochen sein.

Die organische Gruppe bzw. der Rest R¹ weist jedenfalls eine Reaktivität auf, die eine kovalente Bindung des organischen Oligomers und/oder Polymers ermöglicht.

Die organischen Gruppen bzw. Reste R² und/oder R³ können auch eine Reaktivität aufweisen, die eine kovalente Bindung des organischen Oligomers und/oder Polymers ermöglicht. Im Unterschied zur organischen Gruppe R¹ bzw. dem Rest R¹ ist es jedoch nicht erforderlich, daß zwischen den Resten R² und/oder R³ eine kovalente Bindung zu dem organischen Oligomer und/oder Polymer ausgebildet wird. Insofern können die Reste R² und/oder R³ auch nicht-reaktiv sein. Insbesondere sind die Reste R² und R³ vorzugsweise unter den angelegten Reaktionsbedingungen nicht polymerisierbar. Somit ist bevorzugt, daß die Reste R² und R³ im Unterschied zu dem Rest R¹ nicht untereinander polymerisieren und, insbesondere unter den angelegten Reaktionsbedingungen, nicht mit Monomeren zu einem Polymer umgesetzt werden können.

Geeignete organofunktionelle Silane sind beispielsweise viele Vertreter der von der Fa. Degussa (Untere Kanalstrasse 3, D-79618 Rheinfelden) hergestellten und unter dem Handelsnamen "Dynasylan" vertriebenen Produkte anzusehen. Beispielsweise können 3-Methacryloxypropyltrimethoxysilan (Dynasylan MEMO) zum Aufbau eines (Meth)acrylats oder Polyesters, Vinyltri(m)ethoxysilan (Dynasylan VTMO bzw. VTEO) zum Aufbau eines Vinylpolymeren, 3-Mercaptopropyltri(m)ethoxysilan (Dynasylan MTMO oder 3201) zum Einpolymerisieren in Kautschukpolymere, Aminopropyltrimethoxysilan (Dynasylan AMMO) oder N2-Aminoethyl-3-aminopropyltrimethoxysilan (Dynasylan DAMO) zum Aufbau eines β-Hydroxyamines oder 3-Glycidoxypropyltrimethoxysilan (Dynasylan GLYMO) zum Aufbau eines Urethan- oder Polyethernetzwerkes verwendet werden.

Weitere Beispiele für Silane mit Vinyl- bzw. (Meth)acrylatfunktionalitäten sind: Isocyanatotriethoxysilan, 3-Isocyanatopropoxyltriethoxysilan, Vinylethyldichlorsilan, Vinylmethyldichlorsilan, Vinylmethyldiacetoxysilan, Vinylmethyldiethoxysilan, Vinyltriacetoxysilan, Vinyltrichlorsilan, Phenylvinyldiethoxysilan, Phenylallyldiethoxysilan, Phenylallyldichloroysilan, 3-Methacryloxypropyltriethoxysilan, Methacryloxy-propyltrimethoxysilan, 3-Acryloxypropyltrimethoxysilan, 2-Methacryloxyethyltri-(m)ethoxysilan, 2-Acryloxyethyltri(m)ethoxysilan, 3-Methacryloxypropyltris(methoxy-ethoxy)silan, 3-Methacryloxypropyltris(butoxyethoxy)silan, 3-Methacryloxypropyl-tris(propoxy)silan, 3-Methacryloxypropyltris(butoxy)silan.

Weiterhin können vorteilhaft sogenannte α-Silane, wie sie von der Fa. Wacker, Burghausen, Deutschland hergestellt und vertrieben werden, verwendet werden. Bei diesen Silanen sind die reaktionsfähigen organischen Gruppen lediglich durch eine Methyleneinheit vom Si-Atom getrennt. Sie zeichnen sich gegenüber den konventionellen Silanen durch beschleunigte Hydrolyse- und Kondensationsgeschwindigkeiten aus.

Als organische Netzwerkbildner können auch geeignete organofunktionelle Titanate, Zirkonate oder Aluminate verwendet werden, wie sie beispielsweise von der Firma Kenrich Petrochemicals hergestellt und unter dem Handelsnamen Ken-React^{®} angeboten werden (beziehbar bei der Fa. Nordmann, Rassmann GmbH, Kajen 2, 20459 Hamburg). Insbesondere die im KEN-REACT® Reference Manual Titanate, Zirconate and Aluminate Coupling Agents, 2. Überarbeitete Ausgabe, Sommer 1993, auf den Seiten 2 bis 21 angegebenen Kopplungsreagenzien können zum größten Teil als organische Netzwerkbildner verwendet werden. Die Offenbarung der Seiten 2 bis 21 des vorgenannten KEN-REACT® Reference Manuals wird hiermit unter Bezugnahme aufgenommen.

Diese organischen Netzwerkbildner weisen vorzugsweise als hydrolysierbare oder kondensierbare Gruppe X bevorzugt Alkoxy, jedoch auch Hydroxy oder Halogen auf. Im Fall von Alkoxy kann auch eine cyclische Gruppe, die über zwei Sauerstoffatome an das Zentralatom M gebunden ist, wie beispielsweise Oxoethylen oder Cycloneopentyl, vorliegen. Das Zentralatom M hat in diesem Fall nur noch zwei weitere Substituenten. Die hydrolysierbare Gruppe kann auch Bestandteil einer zyklischen Einheit, die über weitere Sauerstoffatome an das Zentralatom koordinativ gebunden sind, sein und somit nach Hydrolyse nicht vom Molekül abgespalten werden.

Bei weiteren Formen können zwei koordinativ an das Zentralatom gebundene Organophosphitoliganden vorliegen. In diesem Fall sind vier Alkoxyliganden an das Zentralatom gebunden.

Diese Al-, Zr- oder Ti-organischen Netzwerkbildner können in Form von Chelatkomplexen oder Koordinationskomplexen vorliegen. Die Liganden können dabei Heteroatome, vorzugsweise N, S oder O, enthalten.

Beispiele derartiger organischer Netzwerkbildner sind (siehe KEN-REACT® Reference Manual - Titanate, Zirconate and Aluminate Coupling Agents by Salvatore J. Monte):

Isopropyldimethacrylisostearoyltitanat(IV) (KR7), Alkoxytrimethacryltitanat (KR 33DS), Isopropyltri(N-ethylendiamino)ethyltitanat(IV) (KR 44), Tris(2-propenoato-0)methoxydiglycolylototitanat (KR 39DS), Methacrylatotriisopropoxytitanat, Methacryloxyethylacetoacetonatotriisopropoxytitanat, (2-Methacryloxyethoxy)-triisopropoxytitanat, Titan(IV)2,2(bis 2propenolatomethyl)butanolatotris(dioctyl)pyrophosphato-0 (LICA 38J), Methacryloxyethylacetoacetonatotri-n-propoxyzirkonat, Neopentyl(diallyl)oxy-tri(N-ethylendiamino)ethylzirconat(IV) (NZ 44), 9-Octadecenylacetoacetatodiisopropoxyaluminat.

Die anorganische Komponente der Mischphase besteht bevorzugt aus Metalloxid- und/oder Metalloxidhydrat und/oder Metallsuboxid- und/oder Metallhydroxid, welches untereinander wenigstens teilweise ein zwei- oder dreidimensionales Netzwerk ausbildet.

Der anorganische Anteil der Mischphase aus Metalloxid und/oder Metallsuboxid und/oder Metallhydroxid wird aus folgender Gruppe ausgewählt: Silizium, Aluminium, Titan, Zirkonium, Cer, Chrom, Mangan, Antimon, Zink, Bor, Magnesium und Eisen und deren Mischungen und Legierungen.

Als Ausgangsverbindungen, die als anorganische Netzwerkbildner wirken, dieser Oxide werden bevorzugt Alkoxide, Hydroxide und Halogenide dieser Verbindungen verwendet.

Vorzugsweise besitzen die anorganischen Netzwerkbildner die allgemeine Formel MXₙ,
wobei X unabhängig voneinander eine ggf. hydrolysierbare und/oder kondensierbare Gruppe aus Halogen, Hydroxy oder Alkoxy mit 1-10 C-Atomen, wobei die Alkoxygruppe in der Kohlenstoffkette Heteroatome, vorzugsweise O, S und/oder N, in der Kohlenstoffkette aufweisen kann, ist.

Das Metall M steht vorzugsweise für Si, Al, Ti, Zr, B, Fe, Mg, Mn, Sb, Cr, Zn und/oder Ce steht, mit der Maßgabe, daß,
wenn M für Sb(V) steht,
n = 5 ist und,
wenn M für Si, Ti oder Zr steht,
n = 4 ist und,
wenn M für Al, Ce, Fe(III), Sb(III) oder B steht,
n = 3 ist und,
wenn M für Zn, Fe(II) oder Mg steht,
n = 2 ist.

Im Fall von M = Al, Ti, Zr, Fe kann X auch für chelatisierende Liganden wie beispielsweise Acetylacetonate oder Acetessigsäureester stehen.

Bevorzugt werden anorganische Netzwerkbildner verwendet, bei denen M für Si, Al, Ti und/oder Zr steht und X für Alkoxygruppen mit 1 bis 6 C-Atomen, wobei die Alkoxygruppe in der Kohlenstoffkette Heteroatome, vorzugsweise O, S und/oder N, in der Kohlenstoffkette aufweisen kann, steht. Besonders bevorzugt werden Tetraalkoxysilane, insbesondere Tetramethoxy- und/oder Tetraethoxysilane, zum Aufbau einer SiO₂-Schicht verwendet.

Es hat sich gezeigt, daß es vorteilhaft ist, wenn bei Erzeugung des anorganischen Netzwerks, beispielsweise durch Hydrolyse von Tetraethoxysilan, Acrylsilan und Acrylmonomer und/oder Methacrylmonomer zugegeben werden. Bei diesem Ansatz erfolgt zum einen eine Ankopplung von Acrylsilan an das sich ausbildende SiO₂-Netzwerkes und zum anderen eine Polymerisation von Acrylmonomer und/oder Methacrylmonomers sowie eine Einpolymerisation der Acrylgruppe des Acrylsilans in das sich aus Acrylmonomeren und/oder Methyacrylmonomeren aufbauende Acryloligomer und/oder -polymer und/oder Methacryloligomer und/oder -polymer.

Wenn bei der Herstellung des plättchenförmigen Substrates Metalloxid aus geeignetem anorganischen Netzwerkbildner in Gegenwart geeigneter Monomere und optional Polymerisationsstarter sowie organischen Netzwerkbildnern gefällt wird, so kann gleichzeitig gezielt ein anorganisches Oxidnetzwerk und ein organisches Oligomer und/oder Polymer gebildet werden. Das anorganische Netzwerk und die organischen Oligomere und/oder Polymere durchdringen sich vorzugsweise gegenseitig.

Bei einer bevorzugten Weiterbildung der Erfindung liegt sowohl ein anorganisches Netzwerk als auch ein organisches Netzwerk aus Oligomeren und/oder Polymeren vor, die sich vorzugsweise gegenseitig durchdringen.

In Abhängigkeit von den Reaktionsbedingungen, Mengenverhältnissen der eingesetzten Edukte und den Kinetiken der ablaufenden Reaktionen kann die anorganisch/organische Mischphase im wesentlichen homogen ausgebildet sein. Es können aber auch kleine Bereiche nur aus anorganischem Netzwerk oder nur aus organischem Oligomer und/oder Polymer in der Mischphase vorliegen.

Unter organischen Oligomeren in der Mischphase wird in dieser Erfindung der in der Polymerchemie übliche Begriff verstanden: d.h. die Verknüpfung von zwei bis zwanzig Monomereinheiten (Hans-Georg Elias, "Makromoleküle" 4. Auflage 1981, Hüthig & Wepf Verlag Basel). Polymere sind Verknüpfungen ab mehr als zwanzig Monomereinheiten.

Aufgrund der Vielfalt organischer Monomere und der Verwendung verschiedener Oxide oder Oxidmischungen ist grundsätzlich ein weiter Bereich an Variationsmöglichkeiten bei der Herstellung einer anorganisch/organischen Mischphase möglich. Durch das Verhältnis von Monomerkonzentration zur Konzentration der organischen Netzwerkbildner ist die durchschnittliche Kettenlänge der organischen Segmente variierbar. So können Mischphasen erzeugt werden, die den Effektpigmenten in vielerlei Hinsicht maßgeschneiderte Eigenschaften verleihen. Die durchschnittliche Kettenlänge der organischen Segmente beträgt 2 bis 10.000, bevorzugt 4 bis 5.000, besonders bevorzugt 10 bis 1.000 und besonders bevorzugt 40 bis 200 Monomereinheiten.

Weiterhin werden als organische Komponente besonders bevorzugt organische Polymere mit durchschnittlichen Kettenlängen von 21 bis 15.000, bevorzugt von 50 bis 5.000 und besonders bevorzugt von 100 bis 1.000 Monomereinheiten, verwendet.

Das organische Oligomer und/oder Polymer in der Mischphase wird durch in der organischen Polymerchemie übliche Gerüstmoleküle aufgebaut. Dies sind beispielsweise C-C-Bindungen, Amide, Ester, Acrylate etc. Nicht verwendet werden Siloxane, da Silanreste der Netzwerkbildner zur Verknüpfung des anorganischen Netzwerkes mit dem organischen Netzwerk dienen. Zudem wird die gewünschte mechanische Flexibilität der Mischphase vorzugsweise nur durch den Einbau von organischen Gerüstmolekülen erreicht werden.

Das organische Oligomer und/oder Polymer in der Mischphase kann bevorzugt durch Polymerisation geeigneter Monomere aufgebaut werden. Die Monomere können Funktionalitäten aufweisen, die aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-. Carbamat-, Estergruppe und Mischungen davon besteht, ausgewählt werden.

Gemäß einer bevorzugten Weiterbildung der Erfindung ist die organische Komponente aus reaktiven organischen Oligomeren und/oder Polymeren aufgebaut, welche reaktionsfähige Gruppen aufweisen, die an das anorganische Netzwerk und/oder mindestens an die Gruppe R¹ der organischen Netzwerkbildner anbinden können.

Bevorzugt ist, dass das reaktive organische Oligomer und/oder Polymer aus der Gruppe, die aus Trialkoxysilan-modifizierten Polyethyleniminen, und Aminosilanmodifizierten Polyethylenoxidurethanen und Mischungen davon besteht, ausgewählt wird.

Bei einer bevorzugten Ausführungsform wird die anorganisch/organische Mischphase unter Verwendung von organischen Netzwerkbildnern zur kovalenten Verknüpfung von anorganischen und organischen Netzwerken und durch Polymerisation von organischen Monomeren, durchgeführt. Besonders bevorzugt ist die Verwendung von (Meth)acrylatfunktionen-haltigen Silanen wie beispielsweise Dynasylan MEMO als organische Netzwerkbildner und von Methacrylaten als Monomeren.

Geeignet sind als Monomere oder reaktive Oligomere oder Polymere insbesondere vernetzende, d.h. mehrfunktionelle (Meth)acrylate. Beispiele für solche Verbindungen sind:

Tetraethylenglycoldiacrylat (TTEGDA), Triethylenglycoldiacrylat (TIEGDA), Polyethylenglycol-400-diacrylat (PEG400DA), 2,2'-Bis(4-acryloxyethoxyphenyl)-propan, Ethylenglycoldimethacrylat (EGDMA), Diethylenglycoldimethacrylat (DEGDMA), Triethylenglycoldimethacrylat (TRGDMA), Tetraethylenglycoldimethacrylat (TEGDMA), Butyldiglycolmethacrylat (BDGMA), Trimethylolpropantrimethacrylat (TMPTMA), 1,3-Butandioldimethacrylat (1,3-BDDMA), 1,4-Butandioldimethacrylat (1,4-BDDMA), 1,6-Hexandioldimethacrylat (1,6-HDMA), 1,6-Hexandioldiacrylat (1,6-HDDA), 1, 12-Dodecandioldimethacrylat (1,12-DDDMA), Neopentylglycoldimethacrylat (NPGDMA).

Besonders bevorzugt ist Trimethylolpropantrimethacrylat (TMPTMA). Diese Verbindungen sind kommerziell erhältlich bei Elf Atochem Deutschland GmbH, D-40474 Düsseldorf Deutschland oder Rohm & Haas, In der Kron 4, 60489 Frankfurt / Main, Deutschland.

Nicht vernetzende (Meth)acrylate können auch als Monomere zum Aufbau der organischen Komponente, d.h. des organischen Oligomers und/oder Polymers, der Mischphase verwendet werden. Abhängig von weiteren funktionellen Gruppen dieser (Meth)acrylate können wiederum vielfältigste Variationsmöglichkeiten der chemischen Zusammensetzung und damit auch der anwendungstechnischen Eigenschaften der unter Verwendung einer Mischphase als plättchenförmigem Substrat hergestellten Effektpigmente ermöglicht werden. Geeignet sind auch Mischungen von vernetzenden und monofunktionellen Vinyl- und/oder (Meth)acrylatmonomeren.

Beispiele monofunktioneller (Meth)acrylate sind: Lauryl(meth)acrylat, Allyl(meth)-acrylat, Propyl(meth)acrylat, Isobornylmethacrylat und Hydroxyethylimidazolinmethacrylat.

Diese Verbindungen sind kommerziell ebenfalls erhältlich bei Elf Atochem Deutschland GmbH, Uerdingerstr. 4 D-40474 Düsseldorf oder bei Rohm & Haas, In der Kron 4, 60489 Frankfurt / Main, Deutschland.

Die Polymerisation von Vinyl- und/oder (Meth)acrylatfunktionellen Monomeren beim Aufbau der anorganisch/organischen Mischphase kann durch thermische Polymerisation erfolgen. Günstiger ist die Verwendung von Polymerisationsstartern, vorzusweise von Radikalinitiatoren. Dabei handelt es sich um handelsübliche i.d.R. organische oder anorganische Peroxide oder Diazoniumverbindungen. Beispiele solcher Verbindungen sind:

Acetyl-cyclohexan-sulfonylperoxid, Bis(2,4-dichlorbenzoyl)peroxid, Diisononanylperoxid, Dioctanoylperoxid, Diacetyl- und Dibenzoylperoxid; Peroxidicarbonate (z.B. Diisopropyl-peroxydicarbonat, Di-n-butylperoxydicarbonat, Di-2-ethylhexyl-peroxydicarbonat, Dicyclohexyl-peroxydicarbonat), Alkylperester (z.B. Cumylperneodecanoat, t-Butyl-perneodecanoat, t-Amyl-perpivalat, t-Butyl-per-2-ethylhexanoat, t-Butylperisobutyrat, t-Butylperbenzoat), Dialkylperoxide (z.B. Dicumylperoxid, t-Butylcumylperoxid, 2,5-Dimethylhexan-2,5-di-t-butylperoxid, Di(t-butylperoxyisopropyl)benzol, Di-t-butyl-peroxid, oder 2,5-Dimethylhexin-3-2,5-di-t-butylperoxid), Perketale (z.B. 1,1'-Bis-(t-butylperoxy)-3,3,5-trimethylcyclohexanonperoxid, Methylisobutylketon-peroxid, Methyl-ethylketonperoxid, Acetylacetonperoxid), Alkylhydroperoxide (z.B. Pinanhydroperoxid, Cumolhydroperoxid, 2,5-Dimethylhexan-2,5-dihydroperoxid oder t-Butylhydroperoxid), Azoverbindungen (z.B. 4-4'-Azo-bis(4-cyanvaleriansäure), 1,1'-Azo-bis(cyclohexan-carbonsäurenitril), 1,1'-Azo-bis(isobutyrosäureamidin)dihydrochlorid, 2,2'-Azo-bis(iso-butyronitril) oder Persulfate wie Natriumperoxodisulfat und Kaliumperoxodisulfat. Bevorzugt ist 2,2'-Azo-bis(isobutyronitril).

Diese Verbindungen sind kommerziell erhältlich bei Aldrich Chemie, D-89552, Steinheim.

Weiterhin kann die Polymerisation von Vinyl- und/oder (Meth)acrylat-funktionellen Monomeren beim Aufbau der anorganisch/organischen Mischphase auch durch eine ATRP (atomic-transfer-radical-polymerisation), der sogenannten Lebendradikalischen Polymerisation durchgeführt werden. Hier wird als organischer Netzwerkbildner bevorzugt eine Silanverbindung, bei der R¹ endständig mit einem alkylhalogenid, bevorzugt einem Alkylbromid mit α-ständiger Estergruppe, versehen ist, verwendet. Ferner werden hierbei Cu(I)-Salze, optional in Mischung mit Cu(II)-salzen oder metallischem Cu, sowie geeignete die Kupferverbindungen komplexierende Liganden zugesetzt. Nähere Einzelheiten hierzu finden sich in der DE 198 38 241 A1.

Bei Verwendung von Epoxysilanen als organische Netzwerkbildner können diese mit mehrfach funktionellen Aminen als Vernetzer umgesetzt werden. Weitere Variationsmöglichkeiten erhält man zusätzlich noch bei Verwendung von mehrfach funktionellen Epoxyverbindungen. Kombinationen mehrfach funktioneller Epoxyverbindungen und mehrfach funktioneller Aminoverbindungen können selbstverständlich auch bei Verwendung von aminofunktionellen Silanen als Kupplungsreagenzien eingesetzt werden.

Zu solchen Reaktionen geeignete und kommerziell erhältliche mehrfach funktionelle Amine sind z.B.: 3,3-Dimethyl-4,4-diaminodicyclohexylmethan, Ethylendiamin, Triethylentetramin, meta-Xylylendiamin, N-Aminoethylpiperazin, 2-Methyl-1,5-pentamethylendiamin, 1,2-Diaminocyclohexan oder Isophorondiamin.

Geeignete kommerziell erhältliche mehrfach funktionelle Epoxyverbindungen sind z.B.: 1,4-Butandioldiglycidether, Glycerintriglycidether, Neopentylglykoldiglycidether, Pentaerythritpolyglycidether, 1,6-Hexandioldiglycidether, Polypropylenglykoldiglycidether oder Trimethylolpropantriglycidether.

Alle diese mehrfach funktionellen Amine und Epoxyverbindungen sind kommerziell erhältlich bei der Firma UPPC: (U. Prümmer Polymer-Chemie GmbH; Mühlhalde 8 in D-88487 Baltringen).

Bei einer weiteren erfindungsgemäßen Ausführungsform wird das organische Netzwerk nicht während der Reaktion hergestellt. Stattdessen verwendet man als organische Komponente reaktive organische Oligomere und/oder Polymere, welche über reaktionsfähige Gruppen verfügen, die eine Anbindung an das Oxidnetzwerk über die mindestens eine Gruppe R¹ der organischen Netzwerkbildner ermöglichen. Um eine effektive Reaktion mit insbesondere der Gruppe R¹ der organischen Netzwerkbildner zu gewährleisten, kann das Oligomer und/oder Polymer vor dem Einbau in die Mischphase auch direkt mit dem organischen Netzwerkbildner umgesetzt werden. Hierzu werden die Oligomere und/oder Polymere in einem geeigneten Lösungsmittel gelöst, mit organischen Netzwerkbildnern versetzt und zur Reaktion gebracht. Die mit dem organischen Netzwerkbildner gekoppelten organischen Oligomere und/oder Polymere können dann mit den zur Erzeugung des anorganischen Netzwerkes verwendeten Metalloxid-bildenden Verbindungen unter Ausbildung der anorganisch/organischen Mischphase umgesetzt werden.

Reaktive organische Oligomere und/oder Polymere, die direkt in das anorganische Netzwerk während der Reaktion eingebaut werden können, sind beispielsweise silanmodifizierte Polyethylenimine oder Polybutadiene oder mit Aminosilan modifizierte Polyethylenoxidurethane. Bei derartigen Verbindungen sind besonders niedrige Molekulargewichte von 100 bis 1000 g/mol bevorzugt. Niedermolekulare Verbindungen dieses Typs weisen über besonders viele Verknüpfungsstellen zum anorganischen Oxidnetzwerk auf und ergeben damit homogener verteilte anorganisch/organische Mischphasen.

Beispiele derartiger kommerziell erhältlicher Verbindungen sind: Trimethoxysilylpropyl- substituiertes Polyethylenimin, Dimethoxymethylsilylpropylsubstituiertes Polyethylenimin, Triethoxysilyl- modifizierte Polybutadiene, Dimethoxymethylsilyl- modifiziertes Polybutadiene, (N-Triethoxysilylpropyl)O-Polyethylenoxidurethan und Poly(trimethysilylpropin) (alle zu beziehen über z.B. ABCR GmbH & Co. Postfach 210135, Hansastr. 29c, D-76151 Karlsruhe, Deutschland). Ein weiteres Beispiel sind mit Silanen modifizierte Phenolformaldehydoligomere, wie sie als Resole oder Novolacke von der Bakelite AG (Gennaer Straße2-4, D-58642 Iserlohn-Letmathe) hergestellt und vertrieben werden.

Bei einer weiteren erfindungsgemäßen Ausführungsform können als reaktive Oligomere und/oder Polymere auch Verbindungen eingesetzt werden, die über reaktive, vorzugsweise polymerisierbare, funktionelle Gruppen verfügen. Die polymerisierbaren funktionellen Gruppen können beispielsweise durch eine nachträgliche Reaktion des Oligomeren und/oder Polymeren (beispielsweise durch eine Polymer-analoge Umsetzung) hergestellt werden. Diese reaktiven Oligomere/Polymere reagieren mit den funktionellen organischen Gruppen geeigneter organischer Netzwerkbildner und werden somit an das bzw. in dem anorganische(n) Oxidnetzwerk kovalent gebunden.

Bei diesen reaktiven Oligomeren und/oder Polymeren kann es sich um Reaktivpolymere aus der Gruppe der Polyacrylate, Polymethacrylate, Polyether, Polyester, Polyamine, Polyamide, Polyole, Polyurethane und Polyolefine handeln.

Organische Oligomere und/oder Polymere, die über geeignete funktionelle Gruppen direkt in die Mischphase eingebaut werden können, sind bevorzugt solche, die über polymerchemisch kompatible funktionelle Gruppen zu jenen der organischen Netzwerkbildner verfügen. So wird im Fall eines Epoxygruppen enthaltenden Silans ein Epoxidharz oder ein aminohaltiges Harz eingesetzt, im Fall von (meth)acrylgruppenhaltigen Silanen werden (Meth)acrylate eingesetzt usw. Erfolgt die Umsetzung der funktionellen Gruppen der organischen Oligomer/Polymere mit den reaktiven Gruppen R¹ der organischen Netzwerkbildner über Kondensations- oder Additionsmechanismen, so sind die funktionellen Gruppen vorzugsweise entsprechend aufeinander abgestimmt. Beispielsweise können epoxidhaltige Polymere insbesondere gut mit Epoxy- oder Aminofunktionalisierten Silanen umgesetzt werden. Auf diese Weise werden die Polymere durch Alkoxysilane modifiziert und sind damit sehr gut zusammen mit beispielsweise Tetraalkoxysilanen zu anorganisch/organischen Mischphasen umsetzbar.

Beispiele für derart verwendbare Präpolymere/Präoligomere) sind das Epoxidharz D.E.R: 330 (Dow Coming; Rheingaustr. 53 in D-65201 Wiesbaden, Deutschland), sowie Polybutadien-poly(2,3-epoxy)butadien-copolymer (erhältlich von Aldrich, D-89552 Steinheim, Deutschland).

Bei einer weiteren bevorzugten Ausgestaltung der Erfindung erfolgt die organische Oligomer- und/oder Polymerbildung innerhalb eines anorganischen Oxids, indem man lediglich die funktionellen Gruppen der organischen Netzwerkbildner gezielt untereinander polymerisieren läßt. So können beispielsweise Netzwerkbildner, bei denen die polymerisierbare Gruppe R¹ Methacrylat-, Acrylat- oder Vinylgruppen sind, durch Zugabe geeigneter Polymerisationsinitiatoren polymerisiert bzw. oligomerisiert werden.

Auch können beispielsweise epoxydhaltige Silane vor dem Einbau in ein Oxidnetzwerk in einem separaten Schritt untereinander beispielsweise zu oligomeren/polymeren Polyethereinheiten reagieren. Eine Mischung geeigneter epoxy- und aminofunktionalisierter Silane kann beispielsweise vor dem Einbau in die anorganisch/organische Mischphase wenigstens teilweise unter Bildung von oligomeren/polymeren β-Hydroxyaminen reagieren und dadurch bereits ein quasi zweidimensionales organisches Netzwerk ausbilden.

Diese Silangemische können nach Oligomerisierung und/oder Polymerisierung dann mit dem entstehenden Oxidnetzwerk unter Bildung einer anorganisch/organischen Mischphase umgesetzt werden.

Derartig gebildete anorganisch/organische Mischphasen weisen vorzugsweise einen geringeren Polymerisationsgrad bei der organischen Komponente auf, als wenn zusätzlich organische Monomere einpolymerisiert, d.h. bei der Polymerisation zusätzlich zugesetzt werden.

Bevorzugt ist daher bei einer weiteren Ausführungsform der Erfindung die zusätzliche Verwendung organischer Monomere zum Aufbau des organischen Netzwerkes.

Die mittlere Dicke der Mischphase beträgt vorzugsweise mindestens 20 nm, bevorzugt mindestens 40 nm und besonders bevorzugt mindestens 80 nm. Unterhalb von 20 nm ist die optische Wirkweise zu gering, d.h. es entstehen praktisch keine Interferenzeffekt nach der Beschichtung mit hochbrechenden Metalloxiden.

Die mechanische Stabilisierung der erfindungsgemäßen Effektpigmente basierend auf dem Substrat umfassend eine anorganisch/organischen Mischphase ist auch noch bei sehr hohen Dicken der Mischphase gegeben. Üblicherweise liegt die mittlere Dicke der anorganisch/organischen Mischphase bzw des Substrates in einem Bereich von etwa 20 nm bis 5000 nm, vorzugsweise von 50 bis 1000 nm, weiter bevorzugt 100 bis 300 nm.

Die beiden Komponenten der anorganisch/organischen Mischphase des Substrates können über die Dicke der Mischphase gesehen sowohl homogen verteilt vorliegen als auch inhomogen wie beispielsweise in Form einer Gradientenverteilung, so dass sich das Mischungsverhältnis der beiden Komponenten entlang der Dicke der Mischphase sich ändert. Die oben angegebenen Begrenzungen der Zusammensetzung der Mischphase gelten im Fall einer inhomogenen Verteilung der einzelnen Komponenten für den Mittelwert entlang der Dicke der Mischphase. Erfindungsgemäß wird jedoch eine im wesentlichen homogene, bevorzugt homogene, Verteilung von anorganischem Netzwerk und organischem Oligomer und/oder Polymer bevorzugt.

Die organischen Oligomere und/oder Polymere können beispielsweise auch zumindest teilweise in Form von Nanopartikeln in dem anorganischen Netzwerk unter Ausbildung der anorganisch/organischen Mischphase vorliegen.

Gemäß einer bevorzugten Ausführungsform liegt die anorganische Komponente, vorzugsweise als anorganische Oxidkomponente, zumindest teilweise in Form von Nanopartikeln in dem organischen Oligomer und/oder Polymer unter Ausbildung der anorganisch/organischen Mischphase vor.

Gemäß einer weiteren Variante der Erfindung weist die anorganisch/organische Mischphase einen im wesentlichen homogenen Aufbau auf, wobei die anorganischen Nanopartikel in im wesentlichen organischer Umgebung aus Oligomer und/oder Polymer bzw. die organischen Nanopartikel in Form von Oligomer und/oder Polymer in anorganischer Umgebung homogen verteilt vorliegen. Ein homogener Aufbau wird insbesondere bei Verwendung eines hohen Anteils an organischen Netzwerbildnern bei Erzeugung der anorganisch/organischen Mischphase erhalten.

Die, vorzugsweise transparente, plättchenförmige anorganisch/organische Mischphase oder das plättchenförmige Substrat mit der anorganisch/organischen Mischphase ist vorzugsweise niedrigbrechend, wobei unter niedrigbrechend ein Brechungsindex < 1,8 zu verstehen ist.

Die bei der vorliegenden Erfindung verwendeten Substrate mit anorganisch/organischer Mischphase weisen vorzugsweise eine Standardabweichung bei der mittleren Dickenverteilung auf, die geringer als 20%, bevorzugt geringer als 15% und besonders bevorzugt geringer als 10% ist. Die bei der vorliegenden Erfindung verwendeten Substrate verfügen über besonders glatte Oberflächen. Mit diesen Substraten lassen sich daher besonders farbintensive Effektpigmente mit starken Farbflops herstellen.

Bevorzugt sind erfindungsgemäß plättchenförmige Substrate mit einer mittleren Dicke von 20 bis 5.000 nm, besonders bevorzugt von 25 bis 1.000 nm, besonders bevorzugt von 30 bis 500 nm und noch weiter besonders bevorzugt von 40 bis 350 nm. Derart dünne plättchenförmige Substrate eignen sich besonders gut bei Automobilanwendungen, da hier die Schichtdicken der Basislackschichten sehr gering sind (12 - 15 µm) und der Trend zu noch geringeren Schichtdicken geht. Derart dünne Substrate sind die Voraussetzung für relativ dünne Effektpigmente, die sich sogar in derart dünnen Lacksystemen optimal orientieren können. Optimal orientierte Pigmente bewirken auch optimale optische Eigenschaften wie beispielsweise Glanz und Farbflop.

Auf diesen - vorzugsweise niedrig brechenden - plättchenförmigen, transparenten Substraten mit oder aus anorganisch/organischer Mischphase werden hochbrechende, Schichten abgeschieden. Derartige Schichten werden vorzugsweise aus der Gruppe, bestehend aus Metallchalkogeniden, insbesondere Metalloxiden, Metallhydroxiden, Metalloxidhydraten, Metallsuboxiden und Metallsulfiden, Metallfluoriden, Metallnitriden, Metallcarbiden und deren Mischungen, ausgewählt.

Vorzugsweise wird mindestens eine hochbrechende Beschichtung auf wenigstens einer Seite des plättchenförmigen Substrates aufgebracht. Die hochbrechende Beschichtung, vorzugsweise Metalloxidschicht und/oder Metallhydroxidschicht und/oder Metalloxidhydratschicht, weist eine Brechzahl n ≥ 2,0 auf. Vorzugsweise ist das plättchenförmige Substrat mit oder aus anorganisch/organischer Mischphase mit einer hochbrechenden Beschichtung, vorzugsweise einer Metalloxidschicht und/oder Metallhydroxidschicht, mit einer Brechzahl n ≥ 2 umhüllend beschichtet.

Unter "umhüllend" wird im Sinne der Erfindung verstanden, dass sowohl die obere Fläche und die untere Fläche als auch die Seitenkanten des plättchenförmigen Substrates beschichtet sind.

Bevorzugt werden die plättchenförmigen Substrate mit oder aus anorganisch/organischer Mischphase zur Herstellung von Effektpigmenten mit einem mehrschichtigen Schichtaufbau mit oder aus hochbrechenden Metalloxid, Metallhydroxid, Metallsuboxid und/oder Metalloxidhydrat beschichtet, wobei die Reihenfolge der Schichten variabel ist. Die Metalloxide, Metallhydroxide, Metallsuboxide und/oder Metalloxidhydrate können auch nebeneinander in derselben Schicht vorliegen.

Der Brechungsindex der hochbrechenden Metalloxidschicht und/oder Metallhydroxidschicht ist, um beispielsweise einen guten Perlglanzeffekt zu ergeben, größer als 2,0, bevorzugt größer als 2,2, weiter bevorzugt größer als 2,3, noch weiter bevorzugt größer als 2,4, und besonders bevorzugt 2,5 oder größer.

Bevorzugt werden dabei die plättchenförmigen Substrate mit oder aus anorganisch/organischer Mischphase zur Herstellung von Effektpigmenten, beispielsweise Perlglanzpigmenten, mit einer oder mehreren hochbrechenden Metalloxidschichten aus der Gruppe, bestehend aus oder umfassend TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen, beschichtet. Besonders bevorzugt sind TiO₂ und/oder Fe₂O₃. Besonders bevorzugt ist TiO₂ in der Rutilmodifikation.

Vorzugsweise wird das Titanoxid in der Rutil-, Anatas- und/oder Pseudobrookit-Modifikation in den hochbrechenden Metalloxidschichten verwendet.

Vorzugsweise wird das Eisenoxid in der Hämatit-, Goethit- und/oder Magnetit-Modifikation in den hochbrechenden Metalloxidschichten verwendet

Bei einer weiteren Ausführungsform der Erfindung weist der mehrschichtige Schichtaufbau eine Schichtenfolge auf, bei dem wenigstens eine hochbrechende Schicht und wenigstens eine niedrigbrechende Schicht in alternierender Weise auf dem Substrat angeordnet sind (sogenannter Multilayeraufbau).

Bei der alternierenden Anordnung ist es auch möglich, ein oder mehrere hochbrechende Schichten unmittelbar übereinander und nachfolgend ein oder mehrere niedrigbrechende Schichten unmittelbar übereinander anzuordnen. Wesentlich ist jedoch, dass in dem Schichtaufbau hoch- und niedrigbrechende Schichten vorkommen.

Bevorzugt ist, dass der mehrschichtige Schichtaufbau eine Schichtenfolge aufweist, bei dem wenigstens eine hochbrechende Schicht, wenigstens eine niedrigbrechende Schicht und wenigstens eine hochbrechende Schicht auf dem Substratkern nacheinander angeordnet sind.

Auch bei dieser Variante können ein oder mehrere niedrig- bzw. hochbrechende Schichten jeweils unmittelbar übereinander angeordnet sein. Wesentlich ist jedoch, dass in dem Schichtaufbau von innen nach außen hoch- und niedrig- und wiederum hochbrechende Schichten angeordnet sind.

Vorzugsweise enthält oder besteht die wenigstens eine hochbrechende Schicht aus Metalloxid und/oder Metallhydroxid aus der Gruppe, bestehend aus TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen. Die niedrigbrechende Schicht enthält oder besteht vorzugsweise aus Metalloxid und/oder Metallhydroxid aus der Gruppe, bestehend aus SiO₂, Al₂O₃, B₂O₃ und Mischungen davon.

Effektpigmente, die hoch- und niedrigbrechende Schichten aufweisen, ergeben besonders intensive Interferenzfarben. Insbesondere Effektpigmente wie Perlglanzpigmente mit einer hochbrechenden und einer niedrigbrechenden und wiederum einer hochbrechenden Schicht sind besonders bevorzugt. Eine Schichtfolge mit oder aus TiO₂ / SiO₂ / TiO₂ und optional noch einer Schicht mit Fe₂O₃ können intensive Goldtöne ergeben und sind besonders bevorzugt.

Bei einer weiteren Ausführungsform sind die plättchenförmigen Substrate mit oder aus anorganisch/organischer Mischphase auf wenigstens einer Seite, weiter bevorzugt beidseitig und noch weiter bevorzugt umhüllend mit wenigstens einer semitransparenten Metallschicht beschichtet.

Die Metalle der semitransparenten Metallschichten sind bevorzugt aus der Gruppe bestehend aus Silber, Aluminium, Chrom, Titan, Nickel, Gold, Platin, Palladium, Kupfer, Zink, Eisen deren Mischungen und deren Legierungen, ausgewählt. Die Dicken der semitransparenten Schichten liegen vorzugsweise in einem Bereich von ca. 2 bis ca. 30 nm, weiter bevorzugt von ca. 5 bis ca. 20 nm.

Bevorzugt werden bei der vorliegenden Erfindung als semitransparente Metallschichten Silber oder Chrom, mit denen das Substrat, das die vorstehend beschriebene anorganisch/organische Mischphase aufweist oder daraus besteht, beschichtet wird.

Die semitransparenten Metallschichten können durch alle gängigen Verfahren wie die nasschemische stromlose Abscheidung, CVD- oder PVD-Verfahren auf mindestens eine Seite des Substrates, welches eine anorganisch/organische Mischphase umfasst, aufgebracht werden.

Auch mehrschichtige Interferenzpigmente, wie sie z.B. in der DE 19618569 beschrieben werden, umfassend ein Substrat mit oder aus anorganisch/organischer Mischphase, die mit alternierenden Schichten von Metalloxiden mit niedriger und hoher Brechzahl beschichtet ist, sind von der vorliegenden Erfindung umfasst.

Plättchenförmig sind die Substrate, die einen Formfaktor (Verhältnis des Mittelwertes der Längsausdehnung zur Dicke) von 3 bis 10.000, bevorzugt von 5 bis 5.000 und ganz besonders bevorzugt von 10 bis 4.500 haben.

Die Größenverhältnisse der plättchenförmigen Substrate werden charakterisiert durch den Mittelwert (d₅₀-Wert) der Summenverteilungskurve, wie sie üblicherweise mit Laserbeugungsmethoden gemessen werden. Hierbei sind bevorzugt Größen mit einem d₅₀ von 0,5 bis 2.000 µm, besonders bevorzugt von 1 bis 1.000 µm und ganz besonders bevorzugt von 1,5 bis 300 µm.

Im einzelnen hängt die Größe des plättchenförmigen Substrates vom Anwendungsgebiet und dem gewünschten Effekt ab und ist vom Fachmann dementsprechend auszuwählen.

Bei einer weiteren erfindungsgemäßen Weiterbildung wird die anorganisch/organisch modifizierte Mischphase zusätzlich durch die Verwendung von Netzwerkwandlern modifiziert. Netzwerkwandler bilden im Unterschied zu den organischen Netzwerkbildnern keine organischen Oligomere/Polymere aus und polymerisieren weder mit zugesetzten organischen Monomeren noch untereinander.

Bei organischen Netzwerkwandlern handelt es sich um Reagenzien, die sowohl mindestens eine hydrolysierbare Gruppe als auch mindestens eine organische Gruppe enthalten, die jedoch nicht notwendigerweise reaktiv oder polymerisationsfähig sein muß.

Organische Netzwerkwandler sind vorzugsweise Verbindungen gemäß der allgemeinen Formel (III)

R¹ₙR²ₘR³ₒSiX₍₄₋ₙ₋ₘ₋ₒ₎ (III),

wobei X für eine hydrolysierbare Gruppe, nach deren Hydrolyse eine kovalente Bindung von organischem Netzwerkwandler an das anorganische Netzwerk ausgebildet werden kann, steht,
und R¹, R² und R³ unabhängig voneinander jeweils für eine nicht-reaktive organische Gruppe stehen, mit der Maßgabe,
dass n, m und o ganze Zahlen sind, wobei n+m+o = 1-3 und n = 1 bis 3, m = 0 bis 2 und o = 0 bis 2 ist,
und/oder der allgemeinen Formel (IV)

R⁴ₚMX₍ₖ₋ₚ₎ (IV),

wobei die Verbindung wenigstens eine hydrolysierbare Gruppe X, nach deren Hydrolyse eine kovalente Bindung von organischem Netzwerkwandler mit dem anorganischen Netzwerk ausgebildet werden kann, und wenigstens einen nichtreaktionsfähigen organischen Rest R⁴ aufweist, wobei
k für die formale Oxidationszahl von M steht,
M für Al, Zr oder Ti steht, und
p für eine ganze Zahl von 1 bis (k-1) steht.

Die hydrolysierbare oder kondensierbare Gruppe X der organischen Netzwerkwandler wird vorzugsweise aus der Gruppe, die aus Halogen, Hydroxy oder Alkoxy mit 1-10 C-Atomen, die linear oder verzweigt sein können, besteht, ausgewählt.

Die organisch funktionalisierten Gruppen R¹, R² und R³ werden vorzugsweise aus der Gruppe ausgewählt, die aus H-, Alkyl-, Alkenyl-, Alkinyl-, Aryl-, Alkylaryl-, Arylalkyl-, Alkenylaryl-, Arylalkinyl-, Alkinylaryl-, Cycloalkyl-, Alkylcycloalkyl-, Cycloalkylalkyl-, Amino-, Hydroxy-, Thiol-, Mercaptan-, fluorierte Alkyl, teilfluorierte Alkyl-, (teil)fluorierte Aryl-, (teil)fluorierte Alkylaryl-, Acrylat-, Methacrylat-, Vinyl-, Epoxy-, Carboxy- und Estergruppe besteht. Vorzugsweise weisen die Reste R¹, R² und R³ Kettenlängen mit 3 bis 20 Kohlenstoffatomen, weiter bevorzugt mit 5 bis 15 Kohlenstoffatomen auf. Die Reste R¹, R² und R³ können dabei zyklisch, verzweigt und/oder linear sein und Heteroatome wie O, S und N in der Kohlenstoffkette oder dem Kohlenstoffringsystem enthalten. Bezüglich der Länge der funktionellen Gruppen R¹, R² und R³ wird entsprechend auf die Ausführungen zum organischen Netzwerkbildner verwiesen.

Die oben angeführten Funktionalitäten der organischen Netzwerkwandler sind teilweise identisch mit jenen, die auch als organische Netzwerkbildner eingesetzt werden. Der Unterschied ergibt sich daraus, daß die Funktionalitäten in diesem Fall nicht untereinander und nicht mit organischen Monomeren oder Polymeren reagieren sollen. Dies ist dann der Fall, wenn die Funktionalitäten von R¹, R² und R³ hinsichtlich ihrer chemischen Reaktivität unterschiedlich zu den Funktionalitäten der Monomere oder auch zu jenen der organischen Oligomere und/oder Polymere sind. Somit kann durch Wahl von Netzwerkwandler und geeigneten Monomeren die Reaktion so gesteuert werden, daß keine Umsetzung von Netzwerkwandler untereinander und mit den Monomeren erfolgt.

Wird beispielsweise ausschließlich eine Mischung von organofunktionellen Silanen zum Aufbau der organischen Komponente, d.h. des organischen Oligomers und/oder Polymers, der Mischphase verwendet, so fungieren alle organofunktionelle Silane, deren funktionelle Gruppen nicht untereinander reagieren, als organische Netzwerkwandler.

Als reine organische Netzwerkwandler geeignete organofunktionelle Silane sind vor allem Verbindungen ohne Funktionalitäten mit ausgeprägter chemischer Reaktivität. Darunter sind vor allem (C₁ - C₄₀)-Alkyl, (C₆ - C₃₆)Aryl, sowie per- oder teilfluorierte (C₁ - C₄₀)Alkyl und/oder (C₆ - C₄₀)Arylfunktionalitäten als Reste R¹, R² und R³ zu verstehen. Die Alkylreste können linear, verzweigt oder zyklisch sein. Beispiele sind:

Propyltri(m)ethoxysilan, Octyltri(m)ethoxysilan, Dodecyltri(m)ethoxysilan, Octadecyltri(m)ethoxysilan, Phenyltri(m)ethoxysilan, Diphenyldi(m)ethoxysilan, Perfluorooctyltri(m)ethoxysilan, 1-,1-,2-,2-,3-,3-,4-,4-Fluorooctyltri(m)ethoxysilan, 5-,5-,6-,6-,7-,7-,8-,8-,8- Fluorooctyltri(m)ethoxysilan, 1H-,1H-,2H-,2H-Perfluoroctyltriethoxysilan (Dynasylan F 8261).

Beispiele für Netzwerkwandler mit Ti, Zr oder Al als Zentralatom sind (siehe Ken-React Reference Manual - Titanate, Zirconate and Aluminate Coupling Agents by Salvatore J. Monte):
Isopropyltriisostrearyltitanat(IV) (KR TTS), Isopropyltri(dioctyl)phosphatotitanat(IV)
(KR 12), Isopropyltri(dodecyl)benzolsulfonyltitanat(IV) (KR 9S),
Isopropyltri(dioctyl)pyrophosphatotitanat(IV) (KR 38S),
Di(dioctyl)phosphatoethylentitantat(IV) (KR 212),
Di(dioctyl)pyrophosphatoethylentitantat(IV) (KR 238S),
Di(dioctyl)pyrophosphatooxoethylentitanta(IV) (KR 138S),
Diisobuty(stearyl)acetoacetylaluminat (KA 301).

Gemäß einer bevorzugten Variante der Erfindung enthält das Substrat, umfassend wenigstens eine anorganisch/organische Mischphase, farbige oder farblose nanoskalige Partikel aus Metall, Metalloxid, Metallsulfid, Metallselenid, Metallnitrid oder Mischungen oder Kern-Schale-Partikel hieraus. Die Nanopartikel weisen vorzugsweise eine durchschnittliche Größe (Zahlenmittel) in einem Bereich von 1 bis 200 nm und besonders bevorzugt von 1,5 bis 100 nm und weiter bevorzugt von 2 bis 50 nm auf. Die nanoskaligen Partikel können, wie oben ausgeführt, in einer organischen Matrix oder in einer anorganisch/organischen Matrix enthalten sein. Die anorganischen Nanopartikel können Kontakt zueinander haben, wobei sich beispielsweise kettenartige und/oder traubenartige Cluster bilden können.

Vorzugsweise werden die farbigen oder farblosen nanoskaligen Partikel aus der Gruppe, die aus Metall, Metalloxid, Metallsulfid, Metallnitrid und Mischungen und Legierungen und Kern-Schale-Partikel hieraus besteht, ausgewählt.

Gemäß einer Weiterbildung der Erfindung werden die farbigen oder farblosen nanoskaligen Partikel aus Metall der Gruppe, bestehend aus Au, Ag, Cu, Pt, Pd, Ni , Fe sowie Mischungen und Legierungen dieser Metalle, ausgewählt.
Besonders bevorzugt sind hierbei Ag-Nanopartikel mit einer mittleren Größe von 1 bis 50 nm: Diese Partikel verleihen aufgrund ihrer äußerst hohen Absorptionseigenschaften dem Substrat eine intensive gelbe Färbung. Die Färbung ist selbst bei geringen Schichtdicken des Substrates (< 400 nm) noch sehr ausgeprägt. Dieser Effekt ist sehr überraschend, da bisher die wirkungsvolle Einfärbung sehr dünner Substrate nicht für möglich gehalten wurde.
Weiterhin werden bevorzugt Goldpartikel mit einer Größe von 1 bis 20 nm verwendet. Die Goldpartikel können auch agglomeriert vorliegen und so sind Farben von rot bis violett erreichbar.

Die farbigen oder farblosen nanoskaligen Partikel können auch aus Metalloxid der Gruppe, bestehend aus Oxiden der Elemente Si, Al, Zr, Ti, V, Mn, Co, Fe, Cr, Mo, W, Cu, Ag, Zn, Hf, Ta, In, Sn, Sb, ,Lanthanide, Actinide sowie Mischungen und Mischoxiden hiervon, ausgewählt werden.

Ferner können die farbigen oder farblosen nanoskaligen Partikel auch aus Metallsulfid der Gruppe, bestehend aus CdS, PbS, MoS₂, CuS, AgS, ZnS, In₂S₃, Sb₂S₃ sowie Mischungen und Mischsulfiden hiervon, ausgewählt werden. Weiterhin können Metallselenide wie CdSe oder PbSe verwendet werden.

Unter Kern-Schale-Partikeln werden Partikel verstanden, bei denen ein Kern mit einer Schale aus einem von dem Kern verschiedenen Material umgeben ist. Solche Kern-Schale-Partikel weisen vorteilhafte Eigenschaften wie u.a. Kombinationseffekte wie UV-Schutz + erhöhte Stabilität in aggressiven Medien, z.B. SiO₂-gekapselte ZnO-Nanopartikel auf (s. WO 2005/019348, WO2005/070820 sowie die US2004/0009349).

Als Kern-Schale-Partikel kommen folgende Kombinationen in Frage:

| **Kern:** | **Schale:** |
|---|---|
| Metall | Metall |
| Metall | Metalloxid oder Metallsulfid oder Metallselenid |
| Metalloxid | Metall |
| Metallsulfid | Metall |
| Metallselenid | Metall |
| Metalloxid | Metalloxid |
| Metalloxid | Metallsulfid |
| Metalloxid | Metallselenid |
| Metallsulfid | Metallsulfid |
| Metallsulfid | Metalloxid |
| Metallsulfid | Metallselenid |
| Metallselenid | Metalloxid |
| Metallselenid | Metallsulfid |

Durch den Aufbau von Kern-Schale-Partikel können deren Eigenschaften, insbesondere deren optische Eigenschaften gezielt gesteuert werden.

Auch ist es gemäß einer weiteren Variante der Erfindung möglich, dass die anorganisch/organische Mischphase organische Farbstoffe und/oder organische Farbpigmente enthält. Vorzugsweise ist das Substrat eine anorganisch/organische Mischphase, die organische Farbstoffe und/oder organische Farbpigmente enthält.

Es hat sich überraschend gezeigt, dass als nanoskalige Partikel nahezu jegliches anorganisches partikuläres Material verwendet werden kann. Vorzugsweise werden jedoch oxidische Materialien verwendet.

Bei Verwendung von anorganischen, vorzugsweise metalloxidischen, Nanopartikeln können neben den Materialeigenschaften auch die optischen Eigenschaften, wie beispielsweise Brechungsindex des plättchenförmigen Substrates, beeinflusst werden. So kann zum einen die Farbgebung der unter Verwendung der anorganisch/organischen Mischphase hergestellten plättchenförmigen Substrate und mithin der unter Verwendung dieser plättchenförmigen Substrate hergestellten Effektpigmente beeinflusst bzw. eingestellt werden.

Bei Verwendung von magnetischen nanoskaligen Partikeln, beispielsweise von Fe₃O₄, in der anorganisch/organischen Mischphase können die magnetischen Eigenschaften der unter Verwendung dieser plättchenförmigen Substrate hergestellten Effektpigmente beeinflusst oder eingestellt werden. Magnetische Effektpigmente erlauben eine Ausrichtung der Effektpigmente in einem Magnetfeld, beispielsweise in einem Nagellack, wodurch spezielle optische Effekte hervorgerufen werden können. Ferner erlaubt die magnetische Ausrichtung der Pigmente auch die Bereitstellung von Beschichtungen mit definierten magnetischen Eigenschaften, was bei Sicherheitsanwendungen, Echtheitszertifikaten, etc. verwendbar ist.

Bei Verwendung von sehr harten nanoskaligen Partikeln, beispielsweise aus Korund, lassen sich plättchenförmige Substrate mit oder aus anorganisch/organischen Mischphasen mit sehr hoher Punkthärte bereitstellen. Eine hohe Punkthärte ist von Vorteil, da unter Verwendung dieser plättchenförmigen Substrate hergestellte Effektpigment, eine erhöhte mechanische Stabilität aufweist, ohne dabei in der Anwendung abrasiv zu wirken.

Sämtliche vorstehenden Ausführungen bezüglich der anorganisch/organischen Mischphase aus organischem Netzwerk oder organischer Matrix und anorganischem Netzwerk oder anorganischer Matrix gelten entsprechend, wenn in der anorganisch/organische Mischphase anorganischen und/oder organischen Nanopartikel verwendet werden.

Die anorganischen und/oder organischen Nanopartikel können mit reaktiven Oberflächenmodifizierungsmitteln versehen sein, die eine zumindest teilweise kovalente Anbindung an die organische Komponente und/oder anorganische Komponente ermöglichen. Dabei können die obengenannten Netzwerkbildner als Oberflächenmodifizierungsmittel auf die vorzugsweise anorganischen, bevorzugt metalloxidischen oder metallischen, Nanopartikel aufgebracht werden.
So können beispielsweise Goldnanopartikel mit Aminosilanen beschichtet werden und anschließend in die Mischphase eingebaut werden.
Der Gehalt an nanoskaligen Partikeln in der anorganisch/organischen Mischphase liegt vorzugsweise in einem Bereich von 1 bis .200 Gew.-%, weiter bevorzugt von 2 bis 100 Gew.-% und noch weiter bevorzugt von 10 bis 50 Gew.-%, jeweils bezogen auf das Gewicht der anorganisch/organischen Mischphase.

Erfindungsgemäß ist es bevorzugt, dass das plättchenförmige Substrat mit oder aus anorganisch/organischer Mischphase eine mittlere Größe d₅₀ in einem Bereich von 1 bis 5.000 µm, weiter bevorzugt von 2 bis 500 µm, noch weiter bevorzugt 2,5 bis 250 µm. Als sehr geeignet haben sich auch Größenbereiche von 1 bis 3 µm, vorzugsweise zur Verwendung in Kosmetik, von 5 bis 10 µm, vorzugsweise zur Verwendung in Druckfarben, und von 10 bis 30 µm, vorzugsweise zur Verwendung in Lack, erwiesen.
Die mittlere Größe ist der d₅₀-Wert der Volumen gemittelten Summendurchgangsgrößenverteilung, die mittels Lichtbeugungsmethoden (Fraunhofer-Beugung) ermittelt wird. Hierbei wird vorzugsweise das Gerät Cilas 1064 (Fa. Cilas, Frankreich) verwendet.

Weiterhin ist erfindungsgemäß bevorzugt, dass das plättchenförmige Substrat mit oder aus anorganisch/organischer Mischphase eine Kreis- oder Ellipsenform hat oder ein Vieleck Vₙ ist, wobei n die Anzahl der Ecken ist, mit n ≥ 3, und eine weitgehend einheitliche Größe und Form aufweist. Beispielsweise kann n = 4, 5, 6, 7, 8, etc. sein.

Unter einer weitgehend einheitlichen Größe wird erfindungsgemäß verstanden, dass vorzugsweise mehr als etwa 80 %, weiter bevorzugt mehr als 90 %, noch weiter bevorzugt mehr als 95 %, der plättchenförmigen Substrate und somit der unter Verwendung dieser Substrate hergestellten Effektpigmente eine mittlere Größe mit einer Standardabweichung von weniger als 20 %, vorzugsweise von weniger als 10 %, noch weiter bevorzugt von weniger als 5 %, aufweisen

Unter einer weitgehend einheitlichen Form wird erfindungsgemäß verstanden, dass vorzugsweise mehr als etwa 80 %, weiter bevorzugt mehr als 90 %, noch weiter bevorzugt mehr als 95 %, der plättchenförmigen Substrate und somit der unter Verwendung dieser Substrate hergestellten Effektpigmente, die gleiche Formgebung, beispielsweise dreieckig, quadratisch, rechteckig, fünfeckig, sechseckig, siebeneckig, achteckig, etc. oder kreisförmig oder ellipsoid aufweisen.

Weiterhin ist bevorzugt, dass das plättchenförmige Substrat in Kreis- oder Ellipsenform einen Kreisdurchmesser bzw. eine Ellipsenhauptachse mit einer Länge von 4 bis 250 µm und das Vieleck Vₙ einen Durchmesser von 3 bis 250 µm aufweist.

Erfindungsgemäß ist bevorzugt, dass die mindestens eine hochbrechende Beschichtung, mit der das Substrat auf mindestens einer Seite beschichtet ist, eine Metalloxidschicht mit einer Brechzahl n ≥ 2,0 ist. Vorzugsweise ist das plättchenförmige Substrat mit mindestens einer Metalloxidschicht mit einer Brechzahl n ≥ 2,0 umhüllend beschichtet ist.

Als sehr vorteilhaft hat sich erwiesen, wenn dass das plättchenförmige Substrat folgende Beschichtung aufweist:
(A) wenigstens eine, vorzugsweise umhüllende, Beschichtung mit einer Brechzahl n ≥ 2,0
(B) wenigstens eine, vorzugsweise umhüllende, Beschichtung mit einer Brechzahl n ≤ 1,8
(C) wenigstens eine, vorzugsweise umhüllende, Beschichtung mit einer Brechzahl n ≥ 2,0
(D) optional weiterer Schichten, Schutzschichten oder Oberflächenmodifizierungen.

Dabei ist bevorzugt, dass die mindestens eine Metalloxidschicht und/oder Metallhydroxidschicht mit einer Brechzahl n ≥ 2,0 oder die Beschichtungen (A) und/oder (C) aus der Gruppe, bestehend aus Titandioxid, vorzugsweise Rutil, Anatas und/oder Pseudobrookit, Eisenoxid, vorzugsweise Hämatit, Goethit und/oder Magnetit, Ceroxid, Chromoxid, Zinnoxid, Zirkoniumoxid Kobaltoxid und Mischungen davon, ausgewählt wird.

Gemäß einer weiteren Variante der vorliegenden Erfindung ist die semitransparente Metallschicht weitgehend umhüllend, vorzugsweise umhüllend, auf die plättchenförmigen Substrate aufgebracht ist.

Die semitransparente Metallschicht kann dabei zusätzlich zu Metalloxidschichten, vorzugsweise in alternierender Reihenfolge in bezug auf die Brechzahl der Metalloxidschichten, aufgebracht sein. Vorzugsweise sind die semitransparenten Metallschichten als äußerste Schicht der erfindungsgemäßen Effektpigmente aufgebracht.

Gemäß einer bevorzugten Ausführungsform weisen die Effektpigmente nachfolgenden Aufbau auf. Auf das plättchenförmige Substrat mit oder aus anorganisch/organischer Mischphase sind folgende Schichten aufgebracht:
(A) wenigstens eine, vorzugsweise umhüllende, semitransparente Metallschicht
(B) wenigstens eine, vorzugsweise umhüllende, Beschichtung mit einer Brechzahl n ≤ 1,8
(C) wenigstens eine, vorzugsweise umhüllende, semitransparente Metallschicht
(D) optional weiterer Schichten, Schutzschichten oder Oberflächenmodifizierungen.

Vorzugsweise wird die semitransparente Metallschicht aus der Gruppe, bestehend aus Au, Ag, Cu, Al, Fe, Cr, Zn und Mischungen und Legierungen dieser Metalle, ausgewählt.

Gemäß einer weiteren bevorzugten Variante der Erfindung besteht die Schicht (B) aus Siliciumoxid, vorzugsweise SiO₂, Aluminiumoxid, vorzugsweise Al₂O₃, AlOOH, Boroxid oder MgF₂.

Gemäß einer bevorzugten Weiterbildung der Erfindung sind die erfindungsgemäßen Effektpigmente mit mindestens einer weiteren anorganisch/organischen Mischphase bzw. Mischschicht beschichtet. Vorzugsweise ist mindestens eine weitere anorganisch/organische Mischphase bzw. Mischschicht, mit der die erfindungsgemäßen Effektpigmente beschichtet sind, die äußerste Schicht des Effektpigmentes.

Die anorganisch/organische Mischschicht kann die gleiche Zusammensetzung wie das plättchenförmige Substrat oder eine davon verschiedene Zusammensetzung haben. Vorzugsweise sind die Zusammensetzungen in dem plättchenförmigen Substrat mit anorganisch/organischer Mischphase und der zusätzlichen anorganisch/organischen Mischschicht identisch oder nahezu identisch, um vergleichbare Materialeigenschaften, beispielsweise bzgl. Elastizität oder Flexibilität zu haben.

Bei weiteren erfindungsgemäßen Weiterbildungen können auf das Substrat mit oder aus anorganisch/organischer Mischphase eine oder mehrere Beschichtungen, die entweder nur anorganischer oder nur organischer Natur sind, aufgebracht werden, wobei diese Schichten auch alternierend angeordnet sein können. Beispielsweise ist es möglich, auf das plättchenförmige Substrat mit oder aus anorganisch/organischer Mischphase zunächst eine oder mehrere rein anorganische Schichten, beispielsweise Metalloxidschichten, vorzugsweise mit unterschiedlichen Brechzahlen, anzuordnen und als äußerste Schicht(en) eine oder mehrere rein organische Schicht und/oder anorganisch/organische Mischschichten aufzubringen. Die Herstellung bzw. Aufbringung solcher Schichten auf plättchenförmige Substrate ist dem Fachmann bestens bekannt.

Zur Erhöhung der Wetterstabilität weisen die erfindungsgemäßen Effektpigmente bevorzugt Metalloxidschichten, die SiO₂ enthalten oder daraus bestehen, auf. Eine weitere bevorzugte Variante besteht aus einer Ceroxidschicht, die von einer SiO₂-Schicht gefolgt wird. Derartige Schichtfolgen sind insbesondere bei wetterstabilen Effektpigmenten wie Perlglanzpigmenten äußerst vorteilhaft.

Die Schichtdicken von rein anorganischen oder organischen Schichten liegen zwischen 2 und 1.000 nm, bevorzugt zwischen 5 und 500 nm und ganz besonders bevorzugt zwischen 7 und 100 nm.

Unter "rein anorganischen" Schichten werden hier Schichten mit einem organischen Anteil unterhalb von 2 Gew-% verstanden. Unter "rein organischen" Schichten versteht man erfindungsgemäß Schichten mit einem anorganischen Anteil unterhalb von 2 Gew.-%. Die vorstehenden Angaben in Gew.-% beziehen sich jeweils auf das Gewicht der jeweiligen Schicht.

Es zeigte sich überraschenderweise, daß die anwendungstechnischen Vorteile der erhöhten mechanischen Stabilität von Effektpigmenten mit einem Substrat mit oder aus anorganisch/organischer Mischphase weitgehend unabhängig davon sind, ob weitere rein anorganische oder rein organische Schichten vorhanden sind. Es kann von Vorteil sein, bei der Beschichtung zunächst mit einer anorganischen Komponente zu beginnen. Auf diese Weise kann eine bessere Haftung der danach folgenden Schichten auf dem Substrat bewirkt werden. Dies gilt insbesondere, wenn die anorganisch/organische Mischphase des plättchenförmigen Substrates sehr hydrophobe Bestandteile, wie beispielsweise fluororganische Funktionalitäten, aufweist.

Eine weitere Beschichtung der anorganisch/organischen Mischphase mit einer beispielsweise reinen Oxidschicht ist ebenfalls vorteilhaft. Auf dieser Oxidschicht kann eine gewünschte organisch-chemische Oberflächenmodifizierung unter Umständen sehr viel besser durchgeführt werden, als dies bei der Mischphase gegebenenfalls möglich ist Dies gilt insbesondere, wenn die Mischphase sehr hydrophobe Bestandteile aufweist und/oder einen sehr hohen Anteil an organischem Oligomer und/oder Polymer aufweist (z.B. > 50 Gew.- %).

Bei einer rein anorganischen Beschichtung aus Metalloxiden/hydroxiden werden diese vorzugsweise aus Oxiden, Metalloxidhydraten, Suboxiden und/oder Hydroxiden der Elemente Silizium, Titan, Aluminium, Zirkonium, Eisen, Kupfer, Zinn, Kobalt, Chrom, Cer, Nickel, Vanadium, Tantal, Yttrium, Molybdän und Wolfram und deren Mischungen ausgewählt. Die Fällung einer solchen Schicht auf plättchenförmige Pigmente oder Substrate zur Herstellung von Effektpigmenten ist dem Fachmann bestens bekannt.

Die der Erfindung zugrundeliegende Aufgabe wird auch durch ein Verfahren zum Herstellen von Effektpigmenten nach einem der Ansprüche 1 bis 10 gelöst, wobei das Verfahren folgende Schritte umfasst:
a) Vermengen wenigstens eines organischen Netzwerkbildners und wenigstens einer reaktiven organischen Komponente und wenigstens eines anorganischen Netzwerkbildners und/oder nanoskaligen anorganischen Partikeln sowie einer Flüssigphase unter Ausbildung einer Reaktionszusammensetzung,
b) Aufbringen der Reaktionszusammensetzung auf einen flächigen Untergrund,
c) Ausbilden einer verfestigten anorganisch/organischen Mischphase,
d) Überführen der anorganisch/organischen Mischphase in plättchenförmige Substrate,
e) Beschichten der plättchenförmigen Substrate mit mindestens einer Beschichtung aus semitransparentem Metall und/oder mindestens einer hochbrechenden Beschichtung mit einer Brechzahl ≥ 2,0.

Eine bevorzugte Weiterbildung des erfindungsgemäßen Verfahrens ist in Anspruch 12 angegeben.

Sämtliche Ausführungen, die in bezug auf die erfindungsgemäßen Effektpigmente gemacht wurden, gelten entsprechend. Insbesondere gelten sämtliche Ausführungen zu den zu verwendenden Reagenzien bzw. Substanzen und Beschichtungen.

Das Vermengen der in Schritt (a) verwendeten Ausgangsstoffe kann unter Verwendung von üblichen Mischverfahren, beispielsweise Rühren, etc. erfolgen. Die so bereitete Reaktionszusammensetzung ist dann, vorzugsweise in flüssigem Zustand, auf einen flächigen Untergrund aufzubringen, um beispielsweise einen Film zu erzeugen, aus dem nach Verfestigung die plättchenförmigen Substrate erzeugt werden.

Das Verfestigen in Schritt (c) kann beispielsweise durch Trocknen der Reaktionszusammensetzung, also Verflüchtigen der Flüssigphase, beispielsweise Wasser und/oder organisches Lösemittel, und/oder Umsetzung der Ausgangsstoffe bewirkt werden. Das Verfestigen der Reaktionszusammensetzung kann durch Erhöhen der Temperatur, Einstrahlen von UV-Licht, IR-Strahlen, Elektronenstrahlen und/oder Gammastrahlen, etc. erfolgen.

Die Verfestigung kann durch eine Vernetzung der organischen Komponenten, beispielsweise durch Radikalreaktion unter Ausbildung eines organischen Netzwerkes oder einer organischen Matrix erfolgen.

Die Verfestigung kann durch Vernetzung der anorganischen Komponente erfolgen, beispielsweise durch Hydrolyse von Alkoxygruppen anorganischer Metallsäureester und Kondensation der entstehenden OH-Gruppen und Wasserabspaltung. Dieser Vorgang kann auch als Sol-Gel-Prozess bezeichnet werden.

Die Vernetzung der organischen Komponenten und der anorganischen Komponenten kann voneinander getrennt oder nebeneinander ablaufen.

Das Überführen der anorganisch/organischen Mischphase in plättchenförmige Substrate in Schritt (d) kann erfolgen, indem die verfestigte anorganisch/organische Mischphase von dem flächigen Untergrund entfernt und nachfolgend zerkleinert oder beim oder vor dem Entfernen vom flächigen Untergrund zerkleinert wird. Die Zerkleinerung kann beispielsweise durch mechanische Einwirkung und/oder Ultraschall erfolgen.

Die so erhaltenen Substrate können getrocknet und/oder klassiert werden. Die Substrate können auch in eine pastöse Form überführt werden.

Das Beschichten der plättchenförmigen Substrate mit mindestens einem semitransparenten Metall und/oder mindestens einer hochbrechenden Beschichtung mit einer Brechzahl ≥ 2,0 unter Bereitstellung der erfindungsgemäßen Effektpigmente kann mit den üblichen dem Fachmann geläufigen Verfahren erfolgen.

Nach der Herstellung der erfindungsgemäßen Effektpigmente können diese als Effektpigmentsuspension, Effektpigmentepaste oder als staubfreie oder staubarme Trockenpräparation bereitgestellt werden. Die Trockenpräparation weist üblicherweise einen Feuchtegehalt, beispielsweise von Wasser und/oder organischem Lösemittel, in einem Bereich von bis zu 15 Gew.-%, vorzugsweise von 0,5 bis 10 Gew.-%, noch weiter bevorzugt von 2 bis 8 Gew.-%, jeweils bezogen auf das Gesamtgewicht der Trockenpräparation, auf.

Gemäß einer bevorzugten Weiterbildung des erfindungsgemäßen Verfahrens weist der flächige Untergrund eine Strukturierung oder Prägung auf.

Bei Verwendung eines strukturierten oder geprägten flächigen Untergrundes lassen sich mithin plättchenförmige Substrate bereitstellen, die an einer oder beiden Oberflächen ebenfalls eine entsprechende Strukturierung oder Prägung aufweisen. Um eine Strukturierung oder Prägung auf beiden Seiten der plättchenförmigen Substrate zu erhalten, kann beispielsweise nach Aufbringung der Reaktionszusammensetzung auf den struktrurierten oder geprägten flächigen Untergrund eine entsprechend strukturierte oder geprägte Fläche, beispielsweise in Folienform oder als Stempel, auf den erzeugten Film aus anorganisch/organischer Mischphase aufgelegt werden, so daß die Strukturierung bzw. Prägung auf Ober- und Unterseite dieses Films erfolgt.

Diese Strukturierung bzw. Prägung kann dann bei den nachfolgenden Beschichtungen mit hochbrechenden Materialien oder semitransparenten Metallschichten erhalten bleiben, wodurch sich sehr interessante optische Effekte, beispielsweise Effektpigmente mit einem Regenbogeneffekt bereitstellen lassen. Vorzugsweise weisen derartig strukturierte Substrate 6.000 bis 20.000 Linien pro cm und besonders bevorzugt 8.000 bis 16.000 Linien pro cm auf.

Der flächige Untergrund kann auch als, vorzugsweise druckbare, Matrixschablone ausgebildet sein. Nach Aufbringung der in Schritt (a) hergestellten Reaktionszusammensetzung kann diese in einem Druckvorgang auf einen flächigen Untergrund aufgebracht werden, wodurch plättchenförmige Substrate einheitlicher Größe und/oder Form und/oder Prägung und/oder Strukturierung bereitgestellt werden können.

Vorzugsweise ist die Strukturierung oder Prägung des flächigen Untergrunds regelmäßig, so dass in Schritt (d) die anorganisch/organischen Mischenphasen in plättchenförmige Substrate mit weitgehend einheitliche Größe und/oder Form und/oder Prägung und/oder Strukturierung überführt werden.

Die Prägung und/oder Strukturierung kann auch der Ausbildung regelmäßiger Sollbruchkanten dienen, so dass später bei Zerkleinerung der üblicherweise in Form eines Filmes bereitgestellten anorganisch/organischen Mischphase plättchenförmige Substrate weitgehend einheitlicher Form und Größe erhalten werden. Die Prägung bzw. Strukturierung kann selbstverständlich so ausgebildet sein, dass die plättchenförmigen Substrate nach Aufbringung der Reaktionszusammensetzung in Schritt (b) auf den flächigen Untergrund voneinander getrennt ausgebildet werden. In letzterem Fall ist dann ein Separieren der plättchenförmigen Substrate voneinander nicht erforderlich, sondern lediglich vom Untergrund.

Gemäß einer bevorzugten Weiterbildung ist der flächige Untergrund als umlaufendes Band oder Walze ausgebildet. Diese Verfahrensvariante ermöglicht vorteilhaft eine kontinuierliche Verfahrensführung.

Das umlaufende Band oder die Walze kann beispielsweise nach Aufbringung und Verfestigung der anorganisch/organische Mischphase durch Wasser und/oder organisches Lösungsmittel geführt werden, um die anorganisch/organische Mischphase von dem umlaufenden Band bzw. der Walzenoberfläche abzutrennen. Das Abtrennen kann jedoch auch zusätzlich oder alternativ thermisch und/oder mechanisch erfolgen.

Vorzugsweise ist der flächige Untergrund ein, vorzugsweise mit einer Trennschicht versehenes, flächiges Trägermaterial. Die Trennschicht, auch als release coat bezeichnet, erleichtert das Abtrennen oder Ablösen der verfestigten anorganisch/organischen Mischphase. Die Trennschicht kann beispielsweise unter Wärmeeinfluss schmelzen und/oder durch Wasser und/oder organisches Lösemittel aufgelöst werden, so dass die verfestigte anorganisch/organische Mischphase abgetrennt und nachfolgend oder zeitgleich auf die gewünschte Substratgröße zerkleinert werden kann.

Die der Erfindung zugrundeliegende Aufgabe wird auch durch Verwendung der Efektpigmente nach einem der Ansprüche 1 bis 10 in Lacken, Automobillacken, Pulverlacken, Farben, Druckfarben, Sicherheitsdruckfarben, Fassadenbeschichtungen, Bautenbeschichtungen, Kunststoffen, Keramik, Glas oder kosmetischen Zubereitungen gelöst.

Ebenfalls wird Aufgabe der Erfindung durch eine Beschichtungszusammensetzung gelöst, die Effektpigmente nach einem der Ansprüche 1 bis 10 und wenigstens ein Bindemittel und/oder Filmbildner enthält.

Schließlich wird die Aufgabe durch Bereitstellung eines Gegenstands, der mit Effektpigmenten nach einem der Ansprüche 1 bis 10 oder einem Beschichtungsmittel nach Anspruch 14 versehen ist, gelöst.

### Beispiele

### Beispiel 1:

### Herstellung der Substrate:

In einem Becherglas wurden 20 g Isopropanol vorgelegt und die Reaktionsbestandteile gemäß Tabelle 1 zusammengegeben (Reihenfolge: gemäß der Spaltenanordnung) und intensiv mittels Hochgeschwindigkeitsrührer vermischt. Alle Reaktionen enthielten ferner 0,1 g des Netzmittels BYK-345 (Fa. Byk-Chemie, Wesel, Deutschland).

**Tabelle 1: Reaktionskomponenten**

| Beispiel | TEOS | MEMO | Zr/MAS | MAS | TMPTMA | H₂O | AcOH | Radikalstarter |
|---|---|---|---|---|---|---|---|---|
| 1a | 4 g | 1 g | | | 1 g | 0,6 g | 0,1 g | Thermisch, AlBN |
| 1b | 4 g | 1 g | | | 1 g | 0,6 g | 0,1 q | UV, Irgacure 651 |
| 1c | 1 g | 1 g | | | 1 g | 0,2 g | 0,1 g | UV, Irgacure 651 |
| 1d | 1 g | 1 g | | | 4 g | 0,2 g | 0,1 g | UV, Irgacure 651 |
| 1e | 1 g | 4 g | | | 4 g | 0,5 g | 0,1 g | UV, Irgacure 651 |
| 1f | 1 g | 4 g | | 1 g | 4 g | 0,6 g | 0,2 g | Thermisch, AIBN |
| 1g | 1 g | 4 g | | 1 g | 4 g | 0,6 g | 0,2 g | UV, Irgacure 651 |
| 1h | 4 g | - | 1 g | | 1 g | 0,5 g | 0,1 g | UV, Irgacure 651 |
| 1i | 4 g | 1 g | 1 g | | 1 g | 0,6 g | 0,1 g | UV, Irgacure 651 |
| 1j | 1 g | 1 g | 1 g | | 1 g | 0,3 g | 0,1 g | UV, Irgacure 651 |
| 1k | 1 g | 1 g | 1 g | | 4 g | 0,3 g | 0,1 g | UV, Irgacure 651 |
| 1l | 1 g | 4 g | 1 g | | 4 g | 0,5 g | 0,2 g | UV, Irgacure 651 |
| 1m | 1 g | 4 g | 1 g | 1 g | 4 g | 0,7 g | 0,2 g | Thermisch, AlBN |
| 1n | 1 g | 4 g | 1 g | 1 g | 4 g | 0,7 g | 0,2 g | UV, Irgacure 651 |

| | | | | | | | | |
|---|---|---|---|---|---|---|---|---|
| TEOS = Tetraethoxysilan (Degussa) MEMO = Methacrylolyloxypropyltrimethoxysilan (Degussa) Zr/MAS = Zirkon-Methacrylsäure-Komplex MAS = handelsübliche Methacrylsäure TMPTMA = Trimethylolpropan-Trimethacrylat AIBN = 2,2'-Azo-bis(isobutyrosäurenitril) Irgacure 651 = Benzildimethylketal (Ciba) AcOH: Essigsäure | | | | | | | | |

### Auftragung:

Das Sol wurde mittels einer Rakel auf ein umlaufendes Band aus einer Polyterephtalat aufgetragen. Die Filmdicke wurde über die Nassfilmdicke bzw. den Festkörpergehalt des Sols eingestellt.
Die Beispiele 1f und 1m durchliefen dabei eine Heizstrecke, bei der das Sol auf 70°C aufgeheizt wird.

Alle anderen Beispiele durchliefen eine mit UV-Licht bestrahlte Strecke, innerhalb der die Aushärtung der organischen Komponente erfolgte.
Anschließend wurden die Solfilme durch Ablüften getrocknet.

Die organisch vorvernetzten Hybridfilme wurden nun zur Ausbildung des anorganischen Netzwerks in ein Wasserbad, welches 0,02 Gew.% eines Netzmittels enthielt (Disperbyk-184), überführt. Dabei wurden die Alkoxygruppen der anorganischen Metallsäureester hydrolisiert und weitestgehend kondensiert. Es bildete sich ein anorganisch und organisch vernetztes Hybridsystem. Gleichzeitig löste sich der Solfilm von dem Folienmaterial ab.

Die abgelösten Hybridpartikel werden über eine Filternutsche abgetrennt und ggf. noch vorhandene Monomere oder lösliche oligomere Bestandteile ausgewaschen.

Schließlich wurden die abgelösten Filmbruchstücke nun in Wasser dispergiert und mittels eines Ultraturrax-Gerätes zerkleinert.

### Beispiel 2:

### TiO₂-Beschichtung von Hybridpartikeln gemäß Beispiel 1d

Die Hybrid-Plättchen aus Beispiel 1d werden anschließend in Wasser dispergiert und durch langsames Zudosieren von TiOCl₂ bei pH 1,4 mit TiO₂ bis zu blauer Interferenzfarbe beschichtet.
Anschließend werden die erhaltenen beschichteten anorganisch-organischen Hybridpartikel salzfrei gewaschen, getrocknet und bei Temperaturen von 400°C unter Schutzatmosphäre (N₂) getempert.
Man erhält Perlglanzpigmente auf Basis von anorganisch-organischen Hybridplättchen mit hohem Glanz und intensiv blauer Interferenzfarbe.

### Beispiel 3:

### Nachbeschichtung der unter Beispiel 2 hergestellten Perlglanzpigmente mit organisch/anorganischer Schicht:

100 g mit TiO₂ beschichtete Hybridflakes gemäß Beispiel 2 werden in 400 ml Isopropanol dispergiert und auf und auf Siedetemperatur gebracht. Anschließend werden 10,0 g VE-Wasser zugesetzt. Danach leitet man über einen Zeitraum von 30 min eine Lösung von 15,0 g Tetraethoxysilan in 40,0 g Isopropanol mit einer Dosierpumpe (Ismatec) kontinuierlich ein. Zum gleichen Zeitpunkt wird die Zugabe der Lösung A (Dosierrate 1,0 ml/min) gestartet. 10 min nach Beginn der

Tetraethoxysilan-Zugabe wird zusätzlich eine Lösung B mit ebenfalls 1,0 ml/min eingeleitet. 3 min nach Beginn der Zudosierung von Lösung B und weitere 30 min später gibt man jeweils eine Spatelspitze 2,2'-Azo-bis(isobutyrosäurenitril) (AIBN) hinzu. Nach beendeter Zugabe von Lösung B wird die Reaktionsmischung unter Rückfluß noch 6 h gerührt. Nach langsamem Abkühlen auf Raumtemperatur wird die Mischung über Nacht weitergerührt. Das Reaktionsprodukt wird auf einem Büchnertrichter abgetrennt und 6 h im Vakuumtrockenschrank bei 80 °C getrocknet.

Lösung A: 5,0 g 25-ige % wässrige NH₄OH, gelöst in 150 ml Isopropanol.
Lösung B: 0,70 g Dynasylan MEMO, 3,00 g TMPTMA und 0,50 g Allylmethacrylat gelöst in 100 ml Isopropanol.

### Beispiel 4:

### Silberbeschichtung von Hybridpartikeln gemäß Beispiel 1

100 g der Hybridflakes gemäß Beispiel 1 d werden stromlos mit einer dichten Schicht von Silber belegt. Dazu wird eine ammoniakalische Silbernitratlösung zu einer wässrigen Dispersion der Hybridflakes (10 Gew.-% Hybridflakes) gegeben und intensiv gerührt (enthält 12 g AgNO₃). Anschließend wird eine wässrige Lösung von D-Glukose zur Reaktionsmischung gegeben und 2 Stunden bei 60°C gerührt. Der Silbergehalt des resultierenden Produkts beträgt 10 %. Die silberbeschichteten Hybridpartikel werden abfiltriert, gewaschen und bei 100 bis 250 °C ggf. unter Schutzatmosphäre getrocknet. Man erhält hochglänzende Effektpigmente mit einem ausgeprägten Farbflop.

### Beispiel 5:

### Hybridpartikeln gemäß Beispiel 1 mit Rillenstruktur

Es wird wie in Beispiel 1 verfahren, jedoch wird das auf das Band aufgetragene Sol nach einigen Minuten Reaktionszeit mit einem Stempel (PET) geprägt. Der Stempel weist eine regelmäßige Rillenstruktur mit einem Rillenabstand von 14.000 Linien pro cm auf. Ansonsten wird verfahren, wie in Beispiel 1 beschrieben.
Anschließen wird analog Beispiel 4 eine semitransparente Silberschicht auf die Substrate aufgebracht.

Die erhaltenen anorganisch-organischen Hybridpartikel zeigen eine exakte Abformung der aufgeprägten Rillenstruktur. Auf schwarzem Untergrund zeigen sich abhängig vom Betrachtungswinkel alle Farben des Regensbogens.

### Beispiel 6:

### Hybridpartikeln gemäß Beispiel 1d mit einheitlicher Größe und Form

Es wird wie in Beispiel 1d verfahren, jedoch wird als Träger für die Herstellung der anorganisch-organischen Hybridpartikel eine PET-Folie verwendet, auf deren Oberfläche eine regelmäßige quadratische Struktur definierter Kantenlänge (z.B. 40 µm) aufgeprägt ist.
Bedingt durch die quadratische Struktur auf der Folie sind die Bruchkanten vordefiniert und die Hybridplättchen brechen beim Ablösen vom Träger bzw. beim anschließenden Zerkleinern vorzugsweise bei einer Kantenlänge von 40 µm. Somit werden Hybridplättchen mit nahezu einheitlicher Teilchengröße und Form erhalten.

## Patentansprüche

1. Effektpigmente mit plättchenförmigen Substrat, welches mindestens auf einer Seite mit mindestens einer Beschichtung aus semitransparentem Metall und/oder mindestens einer hochbrechenden Beschichtung mit einer Brechzahl ≥ 2,0 versehen ist,
**dadurch gekennzeichnet,**
**dass** das plättchenförmige Substrat aus einer anorganisch/organischen Mischphase besteht, wobei in der anorganischen/organischen Mischphase wenigstens eine anorganische Komponente und wenigstens eine organische Komponente gemeinsam vorliegen und mindestens teilweise miteinander kovalent verbunden sind,
wobei die Mischphase wenigstens teilweise ein anorganisches Netzwerk, das eine oder mehrere anorganische Oxidkomponente(n) aufweist, und wenigstens eine organische Komponente aufweist,
mit der Maßgabe, das der Anteil der organischen Komponente 2 bis 98 Gew.-%, bezogen auf das Gewicht der gesamten anorganisch/organischen Mischphase, beträgt, wobei die organische Komponente wenigstens teilweise mit dem anorganischen Netzwerk über einen oder mehrere organische Netzwerkbildner kovalent verbunden ist.

2. Effektpigmente nach Anspruch 1,
**dadurch gekennzeichnet,**
**dass** die organische Komponente ein organisches Oligomer und/oder Polymer ist.

3. Effektpigmente nach Anspruch 1 oder 2,
**dadurch gekennzeichnet,**
**dass** die wenigstens teilweise kovalente Bindung von anorganischer Oxidkomponente und organischem Oligomer und/oder Polymer wenigstens teilweise durch einen oder mehrere organische Netzwerkbildner erfolgt ist, welcher die allgemeine Formel (I)
R¹ₙR²ₘR³ₒSiX₍₄₋ₙ₋ₘ₋ₒ₎ (I)
aufweist, wobei X für eine hydrolysierbare Gruppe, nach deren Hydrolyse eine kovalente Bindung von organischem Netzwerkbildner mit dem anorganischen Netzwerk ausgebildet werden kann, steht
und R¹ für eine reaktive organische Gruppe steht, die mit dem organischen Oligomer und/oder Polymer kovalent verbindbar ist,
R² und R³ unabhängig voneinander jeweils für eine organische Gruppe stehen, die mit dem organischen Oligomer und/oder Polymer kovalent verbindbar sein können,
mit der Maßgabe,
**dass** n, m und o ganze Zahlen sind, wobei n+m+o = 1-3 und n = 1 bis 3,
m = 0 bis 2 und o = 0 bis 2 ist,
und/oder die allgemeine Formel (II)
(R¹O)ₙ(R²O)ₘ(R³O)ₒMX₍ₖ₋ₙ₋ₘ₋ₒ₎ (II)
aufweist, wobei die Verbindung wenigstens eine hydrolysierbare Gruppe X, nach deren Hydrolyse eine kovalente Bindung von organischem Netzwerkbildner mit dem anorganischen Netzwerk ausgebildet werden kann, wenigstens einen organischen Rest R¹, der für eine reaktive organische Gruppe steht, die mit dem organischen Oligomer und/oder Polymer kovalent verbindbar ist, und R² und R³ unabhängig voneinander jeweils für eine organische Gruppe stehen können, die mit dem organischen Oligomer und/oder Polymer kovalent verbindbar sein können, wobei
k für die formale Oxidationszahl von M steht,
M für Al, Zr oder Ti steht,
n für eine ganze Zahl von 1 bis (k-1) steht,
m für eine ganze Zahl von 0 bis (k-2) steht,
o für für eine ganze Zahl von 0 bis (k-2) steht, und
wobei n+m+o eine ganze Zahl von 1 bis k-1 ist.

4. Effektpigmente nach einem der vorstehenden Ansprüche 1 bis 3,
**dadurch gekennzeichnet,**
**dass** die anorganische Oxidkomponente der Mischphase aus der Gruppe, die aus Metalloxid, Metallsuboxid, Metallhydroxid, Metalloxidhydrat und Mischungen davon besteht, ausgewählt wird.

5. Effektpigmente nach einem der vorhergehenden Ansprüche 1 bis 4,
**dadurch gekennzeichnet,**
**dass** das organische Oligomer und/oder Polymer aus Monomeren aufgebaut ist, die mit Funktionalitäten aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido- ,Carbamat- und Estergruppe und Mischungen davon besteht, ausgewählt sind.

6. Effektpigmente nach einem der vorstehenden Ansprüche,
**dadurch gekennzeichnet,**
**dass** die organische Komponente der anorganisch/organische Mischphase des Substrates zumindest teilweise durch einen oder mehrere organische Netzwerkwandler mit der allgemeinen Formel (III)
R¹ₙR²ₘR³ₒSiX₍₄₋ₙ₋ₘ₋ₒ₎ (III)
umfasst wird, wobei X für eine hydrolysierbare Gruppe, nach deren Hydrolyse eine kovalente Bindung von organischem Netzwerkwandler an das anorganische Netzwerk ausgebildet werden kann, steht,
und R¹, R² und R³ unabhängig voneinander jeweils für eine nicht-reaktive organische Gruppe stehen, mit der Maßgabe,
**dass** n, m und o ganze Zahlen sind, wobei n+m+o = 1-3 und n = 1 bis 3, m = 0 bis 2 und o = 0 bis 2 ist,
und/oder durch einen oder mehrere organischen Netzwerkwandler mit der allgemeinen Formel (IV)
(R⁴O)ₚMX₍ₖ₋ₚ₎ (IV)
modifiziert ist, wobei die Verbindung wenigstens eine hydrolysierbare Gruppe X, nach deren Hydrolyse eine kovalente Bindung von organischem Netzwerkwandler mit dem anorganischen Netzwerk ausgebildet werden kann, und wenigstens einen nicht-reaktionsfähigen organischen Rest R⁴ aufweist, wobei
k für die formale Oxidationszahl von M steht,
M für Al, Zr oder Ti steht, und
p für eine ganze Zahl von 1 bis (k-1) steht.

7. Effektpigmente nach einem der vorstehenden Ansprüche,
**dadurch gekennzeichnet,**
**dass** die wenigstens eine anorganisch/organische Mischphase des Substrates und/oder das Substrat eine Brechzahl < 1,8 aufweist.

8. Effektpigmente nach einem der vorstehenden Ansprüche,
**dadurch gekennzeichnet,**
**dass** das Substrat eine Krels- oder Ellipsenform hat oder ein Vieleck Vₙ ist, wobei
n die Anzahl der Ecken ist, mit n ≥ 3, und eine weitgehend einheitliche Größe und Form aufweist.

9. Effektpigmente nach einem der vorstehenden Ansprüche,
dadurch gekennzelchnet,
dass das plättchenförmige Substrat mit mindestens einer Metalloxidschicht mit einer Brechzahl n ≥ 2,0 umhüllend beschichtet ist.

10. Effektpigmente nach einem der vorstehenden Ansprüche,
**dadurch gekennzeichnet,**
**dass** das plättchenförmige Substrat folgende Beschichtung aufweist:
(A) wenigstens eine, vorzugsweise umhüllende, Beschichtung mit einer Brechzahl n ≥ 2,0
(B) wenigstens eine, vorzugsweise umhüllende, Beschichtung mit einer Brechzahl n ≤ 1,8
(C) wenigstens eine, vorzugsweise umhüllende, Beschichtung mit einer Brechzahl n ≥ 2,0
(D) optional weiterer Schichten, Schutzschichten oder Oberflächenmodifizierungen.

11. Verfahren zum Herstellen von Effektpigmenten nach einem der Ansprüche 1 bis 10,
**dadurch gekennzeichnet,**
**dass** das Verfahren folgende Schritte umfasst.:
a) Vermengen wenigstens eines organischen Netzwerkbildners und wenigstens einer reaktiven organischen Komponente und wenigstens eines anorganischen Netzwerkbildners und/oder nanoskaligen anorganischen Partikeln sowie einer Flüssigphase unter Ausbildung einer Reaktionszusammensetzung,
b) Aufbringen der Reaktionszusammensetzung auf einen flächigen Untergrund,
c) Ausbilden einer verfestigten anorganisch/organischen Mischphase,
d) Überführen der anorganisch/organischen Mischphase in plättchenförmige Substrate,
e) Beschichten der plättchenförmigen Substrate mit mindestens einer Beschichtung aus semitransparentem Metall und/oder mindestens einer hochbrechenden Beschichtung mit einer Brechzahl ≥ 2,0.

12. Verfahren nach Anspruch 11,
**dadurch gekennzeichnet,**
**dass** der flächige Untergrund eine Strukturierung oder Prägung aufweist.

13. Verwendung der Effektpigmente nach einem der Ansprüche 1 bis 10 in Lacken, Automobillacken, Pulverlacken, Farben, Druckfarben, Sicherheitsdruckfarben, Fassadenbeschichtungen, Bautenbeschichtungen, Kunststoffen, Keramik, Glas oder kosmetischen Zubereitungen.

14. Beschichtungszusammensetzung,
**dadurch gekennzeichnet,**
**dass** die Beschichtungszusammensetzung Effektpigmente nach einem der Ansprüche 1 bis 10 und wenigstens ein Bindemittel und/oder Filmbildner enthält.

15. Gegenstand,
**dadurch gekennzeichnet,**
**dass** der Gegenstand mit Effektpigmenten nach einem der Ansprüche 1 bis 10 oder einer Beschichtungszusammensetzung nach Anspruch 14 versehen ist.

## Claims

1. Effect pigments with a platelet-shaped substrate, which is provided at least on one side with at least one coating of semi-transparent metal and/or at least one high-index coating with a refractive index ≥ 2.0,
**characterised in that**
the platelet-shaped substrate comprises a mixed inorganic/organic phase, and at least one inorganic component and at least one organic component are present together in the mixed inorganic/organic phase and are at least partially covalently bonded to one another,
and the mixed phase at least partially comprises an inorganic network containing one or more inorganic component(s) and at least one organic component,
with the proviso that the proportion of the organic component is 2 to 98% by weight relative to the weight of the total mixed inorganic/organic phase, and the organic component is at least partially covalently bonded to the inorganic network via one or more organic network formers.

2. Effect pigments as claimed in claim 1,
**characterised in that**
the organic component is an organic oligomer and/or polymer.

3. Effect pigments as claimed in claim 1 or 2,
**characterised in that**
the at least one partially covalent bond of inorganic oxide component and organic oligomer and/or polymer is at least partially achieved by one or more organic network formers having the general formula (I)
R¹ₙR²ₘR³ₒSiX₍₄₋ₙ₋ₘ₋ₒ₎ (I),
where X stands for a hydrolysable group, following the hydrolysis of which a covalent bond of the organic network former to the inorganic network can be formed,
and R¹ stands for a reactive organic group which can be covalently bonded to the organic oligomer and/or polymer,
R² and R³ independently of one another each stand for an organic group which can be covalently bonded to the organic oligomer and/or polymer,
with the proviso that n, m, o are whole numbers and n+m+o = 1-3 and n = 1 to 3, m = 0 to 2 and o - 0 to 2,
and/or the general formula (II)
(R¹O)ₙ(R²O)ₘ(R³O)ₒMX₍ₖ₋ₙ₋ₘ₋ₒ₎ (II),
and the compound has at least one hydrolysable group, following the hydrolysis of which a covalent bond of organic network former to the inorganic network can be formed, at least one organic radical R¹ which stands for a reactive organic group which can be covalently bonded to the organic oligomer and/or polymer, and R² and R³ independently of one another each stand for an organic group which can be covalently bonded to the organic oligomer and/or polymer, and
k stands for the formal oxidation number of M,
M stands for Al, Zr or Ti,
n stands for a whole number from 1 to (k-1),
m stands for a whole number from 0 to (k-2),
o stands for a whole number from 0 to (k-2) and
n+m+o is a whole number from 1 to k-1.

4. Effect pigments as claimed in one of preceding claims 1 to 3,
**characterised in that**
the inorganic oxide component of the mixed phase is selected from the group comprising metal oxide, metal suboxide, metal hydroxide, metal oxide hydrate and mixtures thereof.

5. Effect pigments as claimed in one of preceding claims 1 to 4,
**characterised in that**
the organic oligomer and/or polymer is made up of monomers with functionalities selected from the group comprising amino, hydroxy, thiol, epoxy, acrylate, methacrylate, vinyl, allyl, alkenyl, alkinyl, carboxy, carboxylic anhydride, isocyanate, cyanate ureido, carbamate and ester group and mixtures thereof.

6. Effect pigments as claimed in one of the preceding claims,
**characterised in that**
the organic component of the mixed inorganic/organic phase of the substrate at least partially comprises one or more organic network modifiers having the general formula (III)
R¹ₙR²ₘR³ₒSiX₍₄₋ₙ₋ₘ₋ₒ₎ (III),
where X stands for a hydrolysable group, following the hydrolysis of which a covalent bond of organic network modifier to the inorganic network can be formed,
and R¹, R² and R³ independently of one another each stand for a non-reactive organic group, with the proviso that n, m and o are whole numbers and n+m+o = 1-3 and n = 1 to 3, m = 0 to 2 and o = 0 to 2,
and/or is modified by one or more organic network modifiers having the general formula (IV)
(R⁴O)ₚMX₍ₖ₋ₚ₎ (IV),
and the compound has at least one hydrolysable group X, following the hydrolysis of which a covalent bond of organic network modifier to the inorganic network can be formed, and at least one organic radical R⁴ that is not capable of a reaction,
and
k stands for the formal oxidation number of M,
M stands for Al, Zr or Ti, and
p stands for a whole number from 1 to (k-1).

7. Effect pigments as claimed in one of the preceding claims,
**characterised in that**
the at least one mixed inorganic/organic phase of the substrate and/or the substrate has a refractive index < 1.8.

8. Effect pigments as claimed in one of the preceding claims,
**characterised in that**
the substrate has a circular or elliptical shape or is a polygon Vn, where
n is the number of corners with n ≥ 3, and has a largely uniform size and shape.

9. Effect pigments as claimed in one of the preceding claims,
**characterised in that**
the platelet-shaped substrate is envelopingly coated with at least one metal oxide layer with a refractive index n ≥ 2.0.

10. Effect pigments as claimed in one of the preceding claims,
**characterised in that**
the platelet-shaped substrate has the following coating:
(A) at least one, preferably enveloping, coating with a refractive index n ≥2.0,
(B) at least one, preferably enveloping, coating with a refractive index n ≤1.8,
(C) at least one, preferably enveloping, coating with a refractive index n ≥ 2.0,
(D) optionally other layers, protective layers or surface modifications.

11. Method of producing effect pigments as claimed in one of claims 1 to 10,
**characterised in that**
the method comprises the following steps:
a) mixing at least one organic network former and at least one reactive organic component and at least one inorganic network former and/or nano-scale inorganic particles as well as a liquid phase to form a reaction composition,
b) applying the reaction composition on a sheet-like base,
c) forming a solidified mixed inorganic/organic phase,
d) converting the mixed inorganic/organic phase to a platelet-shaped substrate,
e) coating the platelet-shaped substrate with at least one coating of semi-transparent metal and/or at least one high-index coating with a refractive index ≥ 2.0.

12. Method as claimed in claim 11,
**characterised in that**
the sheet-like base has structuring or embossing.

13. Use of the effect pigments as claimed in one of claims 1 to 10 in varnishes, automobile paints, powder coatings, paints, printing inks, security printing inks, facade coatings, masonry coatings, plastics, ceramics, glass or cosmetic preparations.

14. Coating composition,
**characterised in that**
the coating composition contains effect pigments as claimed in one of claims 1 to 10 and at least one binding agent and/or film former.

15. Article,
**characterised in that**
the article is coated with effect pigments as claimed in one of claims 1 to 10 or a coating composition as claimed in claim 14.

## Revendications

1. Pigments à effet avec un substrat en forme de plaquettes, lequel est doté au moins sur une face d'au moins un revêtement en métal semi-transparent et/ou d'au moins un revêtement à haut indice de réfraction, avec un indice de réfraction ≥ 2,0,
**caractérisés en ce que**
le substrat en forme de plaquettes consiste en une phase mixte inorganique/organique, sachant que dans la phase mixte inorganique/organique, au moins un composant inorganique et au moins un composant organique coexistent et sont au moins partiellement liés ensemble par covalence,
la phase mixte comportant au moins en partie un réseau inorganique, lequel comporte un ou plusieurs composants oxydes inorganiques, et au moins un composant organique,
avec la condition que la part du composant organique est de 2 à 98 % en poids, rapportée au poids de l'ensemble de la phase mixte inorganique/organique, le composant organique étant au moins en partie lié par covalence au réseau inorganique par l'intermédiaire d'un ou de plusieurs réticulants organiques.

2. Pigments à effet selon la revendication 1,
**caractérisés en ce que**
le composant organique est un oligomère et/ou un polymère organique.

3. Pigments à effet selon la revendication 1 ou 2,
**caractérisés en ce que**
ladite liaison au moins partiellement covalente de composant oxyde inorganique et d'oligomère et/ou de polymère organique est assurée en partie par un ou plusieurs réticulants organiques, lesquels présentent la formule générale (I)
R¹ₙR²ₘR³ₒSiX₍₄₋ₘ₋ₙ₋ₒ₎ (I)
dans laquelle X représente un groupe hydrolysable après l'hydrolyse duquel une liaison covalente du réticulant organique peut se former avec le réseau inorganique,
et R¹ représente un groupe organique réactif qui peut se lier de façon covalente avec l'oligomère et/ou le polymère organique,
R² et R³, indépendamment l'un de l'autre, représentant chacun un groupe organique qui peut le cas échéant se lier de façon covalente à l'oligomère et/ou au polymère organique,
avec la condition
que n, m et o sont des nombres entiers, sachant que l'on a m+n+o = 1 à 3 et n=1 à 3, m = 0 à 2 et o = 0 à 2,
et/ou présentent la formule générale (II)
(R¹O)ₙ(R²O)ₘ(R³O)ₒMX₍ₖ₋ₙ₋ₘ₋ₒ₎ (II)
dans laquelle le composé comporte au moins un groupe hydrolysable X, après l'hydrolyse duquel une liaison covalente du réticulant organique peut se former avec le réseau inorganique,
au moins un radical organique R¹ qui représente un groupe organique réactif qui peut se lier de façon covalente avec l'oligomère et/ou le polymère, et R² et R³ qui, indépendamment l'un de l'autre, peuvent représenter chacun un groupe organique qui peut se lier de façon covalente à l'oligomère et/ou au polymère organique, sachant que
k représente le nombre formel d'oxydation de M,
M représente Al, Zr ou Ti,
n représente un nombre entier de 1 à (k-1),
m représente un nombre entier de 0 à (k-2),
o représente un nombre entier de 0 à (k-2) et
sachant que n+m+o est un nombre entier de 1 à k-1.

4. Pigments à effet selon l'une quelconque des revendications 1 à 3,
**caractérisés en ce que**
le composant oxyde inorganique de la phase mixte est choisi parmi le groupe consistant en un oxyde métallique, un sous-oxyde métallique, un hydroxyde métallique, un hydrate d'oxyde métallique et en des mélanges de ceux-ci.

5. Pigments à effet selon l'une quelconque des revendications 1 à 4,
**caractérisés en ce que**
l'oligomère et/ou le polymère organique sont construits en des monomères qui sont choisis avec des fonctionnalités parmi le groupe qui consistent en un amino, un hydroxyle, un thiol, un époxyde, un acrylate, un méthacrylate, un vinyle, un allyle, un alcényle, un alcynyle, un carboxyle, un anhydride de carboxyle, un isocyanate, un cyanate, un uréido, un carbamate et un ester, et en des mélanges de ceux-ci.

6. Pigments à effet selon l'une quelconque des revendications précédentes,
**caractérisés en ce que**
le composant organique de la phase mixte inorganique/organique du substrat est saisi au moins en partie par un ou plusieurs convertisseurs organiques de réseau de la formule générale (III)
R¹ₙR²ₘR³ₒSiX₍₄₋ₘ₋ₙ₋ₒ₎ (III)
dans laquelle X représente un groupe hydrolysable, après l'hydrolyse duquel une liaison covalente du réticulant organique peut se former avec le réseau inorganique,
et R¹ R² et R³, indépendamment l'un de l'autre, représentent chacun un groupe organique non réactif, avec la condition
que n, m et o sont des nombres entiers, sachant que l'on a m+n+o = 1 à 3 et n=1 à 3, m = 0 à 2 et o = 0 à 2,
et/ou est modifié par un ou plusieurs convertisseurs organiques de réseau de la formule générale (IV)
(R⁴O)ₚMX₍ₖ₋ₚ₎ (IV)
dans laquelle le composé comporte au moins un groupe hydrolysable X après l'hydrolyse duquel une liaison covalente du convertisseur organique de réseau peut se former avec le réseau inorganique,
et au moins un radical organique non réactif R⁴,
sachant que
k représente le nombre d'oxydation formel de M,
M représente Al, Zr ou Ti et
p représente un nombre entier de 1 à (k-1).

7. Pigments à effet selon l'une quelconque des revendications précédentes,
**caractérisés en ce que**
ladite au moins une phase mixte inorganique/organique du substrat et/ou le substrat présentent un indice de réfraction < 1,8.

8. Pigments à effet selon l'une quelconque des revendications précédentes,
**caractérisés en ce que**
le substrat a une forme circulaire ou elliptique ou est un polygone Vₙ, n étant le nombre des angles, avec n ≥ 3, et présente une taille et une forme sensiblement uniformes.

9. Pigments à effet selon l'une quelconque des revendications précédentes,
**caractérisés en ce que**
le substrat en forme de plaquettes est enveloppé par au moins une couche d'oxyde métallique avec un indice de réfraction n ≥ 2,0.

10. Pigments à effet selon l'une quelconque des revendications précédentes,
**caractérisés en ce que**
le substrat en forme de plaquettes comporte le revêtement suivant :
(A) au moins un revêtement, de préférence enveloppant, avec un indice de réfraction n ≥ 2,0
(B) au moins un revêtement, de préférence enveloppant, avec un indice de réfraction n ≤ 1,8
(C) au moins un revêtement, de préférence enveloppant, avec un indice de réfraction n ≥ 2,0
(D) en option, d'autres couches, des couches de protection ou des modifications de surface.

11. Procédé de préparation de pigments à effet selon l'une quelconque des revendications 1 à 10,
**caractérisé en ce que**
le procédé comporte les étapes suivantes :
a) mélangeage d'au moins un réticulant organique et d'au moins un composant organique réactif et d'au moins un réticulant inorganique et/ou de particules inorganiques nanométriques, de même que d'une phase liquide avec formation d'une composition de réaction,
b) application de la composition de réaction sur une base bidimensionnelle,
c) formation d'une phase mixte inorganique/organique solidifiée,
d) transformation de la phase mixte inorganique/organique en des substrats en forme de plaquettes,
e) revêtement des substrats en forme de plaquettes par au moins un revêtement en métal semi-transparent et/ou par au moins un revêtement à haut indice de réfraction avec un indice de réfraction ≥ 2,0.

12. Procédé selon la revendication 11,
**caractérisé en ce que**
la base bidimensionnelle présente une structuration ou un estampage.

13. Utilisation des pigments à effet selon l'une quelconque des revendications 1 à 10 dans des peintures, des peintures automobiles, des poudres pour revêtements électrostatiques, des couleurs, des encres d'imprimerie, des encres d'imprimerie de sécurité, des revêtements de façades, des revêtements de bâtiments, des plastiques, de la céramique, du verre ou des préparations cosmétiques.

14. Composition de revêtement,
**caractérisée en ce que**
la composition de revêtement contient des pigments à effet selon l'une quelconque des revendications 1 à 10 et au moins un liant et/ou un filmogène.

15. Objet
**caractérisé en ce que**
l'objet est doté de pigments à effet selon l'une quelconque des revendications 1 à 10 ou d'une composition de revêtement selon la revendication 14.
